(19) Europäisches Patentamt / European Patent Office / Office européen des brevets

(11) **EP 2 105 479 A1**

(12) **EUROPEAN PATENT APPLICATION**

(43) Date of publication:
**30.09.2009 Bulletin 2009/40**

(51) Int Cl.:
***C09D 11/10*** *(2006.01)*

(21) Application number: **09004100.5**

(22) Date of filing: **23.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.03.2008 JP 2008079166**
**27.02.2009 JP 2009045911**

(71) Applicant: **FUJIFILM Corporation**
**Minato-ku**
**Tokyo (JP)**

(72) Inventor: **Saito, Ryo**
**Kanagawa (JP)**

(74) Representative: **HOFFMANN EITLE**
**Patent- und Rechtsanwälte**
**Arabellastrasse 4**
**81925 München (DE)**

# (54) Ink for ink-jet recording, ink set, image-recording method, image-recording apparatus, and recorded material

(57) An ink for ink-jet recording is provided. The ink for ink-jet recording includes colorant particles containing a colorant and a dispersing agent, and a polymer compound capable of forming a crosslinking bond by application of an active energy ray, wherein the dispersion average particle diameter of the colorant particles is from 1 nm to 50 nm, and a value represented by a formula ($D_{90}$ - $D_{10}$) is 100 nm or less. In the formula ($D_{90}$ - $D_{10}$), $D_{90}$ and $D_{10}$ represent, respectively, a particle diameter at which an integrated value of a particle diameter distribution function of the colorant particles which is represented by a formula dG = F(D)dD is 0.9 of the total number of colorant particles (90% by number), and 0.1 of the total number of colorant particles (10% by number), wherein G represents the number of particles, and D represents a particle diameter.

FIG. 1

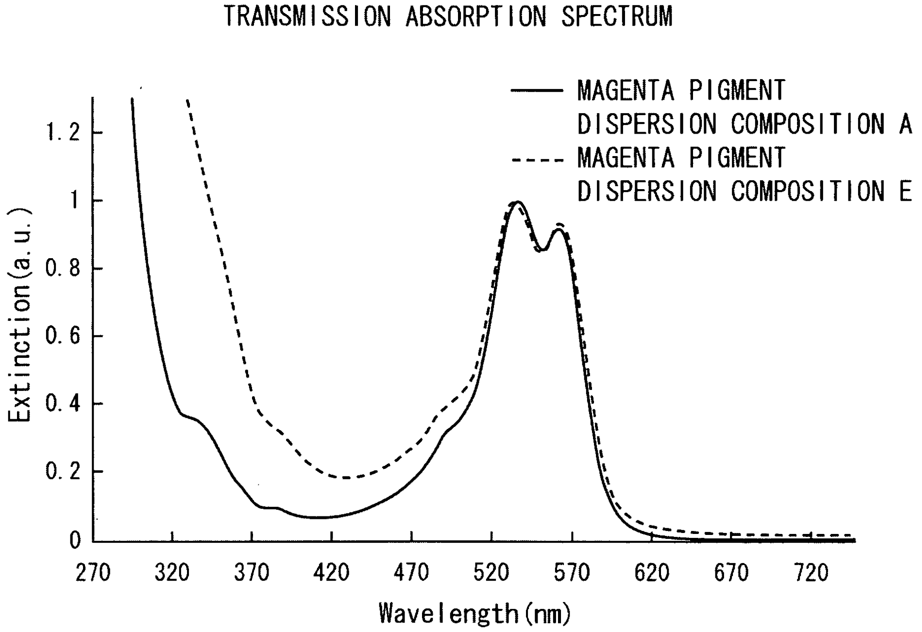


EP 2 105 479 A1

## Description

### BACKGROUND OF THE INVENTION

#### Field of Invention

The present invention relates to an ink for ink-jet recording, an ink set, an image-recording method, an image-recording apparatus, and a recorded material.

#### Description of the Related Art

Inkjet recording methods allow high-resolution images to be recorded with a relatively simple apparatus and have been undergoing rapid development in various fields. Further, ink jet recording methods may be used in a wide variety of applications, and in each of the applications, a recording medium and an ink that are suitable for the application are used.

In recent years, the industrial application of ink-jet recording methods has been investigated. In particular, printers which can be used in on-demand type light printing have been under development.

In addition, various investigations are being performed on systems and inks used for recording. For example, an ink for ink-jet recording that cures by application of UV rays is disclosed.

On the other hand, in industrial applications, it is required to perform printing in a short time and in a large quantity, as well as to give bright and high-resolution images. In particular, when a UV-curable ink is used, upon fixing images, the improvement of curing velocity, the reduction of curing energy, and so on are important issues.

With respect to the requirement of bright images, investigations have been performed for making the particle diameter of colorant included in an ink smaller to form an image with high color saturation (for example, see Japanese Patent Application Laid-Open (JP-A) No. 2005-179506).

Further, an ink, in which pigment having a smaller particle size and having a narrow particle size distribution is used to improve bronzing and gloss property, is disclosed (see, for

### SUMMARY OF THE INVENTION

The present invention has been made in view of the above circumstances and provides an ink for ink-jet recording, an ink set, an image-recording method, an image-recording apparatus, and a recorded material.

According to a first aspect of the invention, an ink for ink-jet recording is provided. The ink for ink-jet recording includes a colorant particles containing a colorant and a dispersing agent, and a polymer compound capable of forming a crosslinking bond by application of an active energy ray, wherein the dispersion average particle diameter of the colorant particles is from 1 nm to 50 nm, and a value represented by a formula ($D_{90}$ - $D_{10}$) is 100 nm or less. In the formula ($D_{90}$ - $D_{10}$), $D_{90}$ and $D_{10}$ represent, respectively, a particle diameter at which an integrated value of a particle diameter distribution function of the colorant particles which is represented by a formula $dG = F(D)dD$ is 0.9 of the total number of colorant particles (90% by number), and 0.1 of the total number of colorant particles (10% by number), wherein G represents the number of particles, and D represents a particle diameter.

According to a second aspect of the invention, an ink set is provided. The ink set includes the ink for ink-jet recording according to the first aspect.

According to a third aspect of the invention, an image-recording method including ejecting the ink for ink-jet recording according to the first aspect, by an ink-jet method to record an image, is provided.

According to a fourth aspect of the invention, an image-recording method including, ejecting the ink for ink-jet recording of the ink set according to the first aspect, by an ink-jet method to record an image, is provided.

According to a fifth aspect of the invention, an image-recording apparatus which includes an ejection unit that ejects the ink for ink-jet recording according to the first aspect by an ink-jet method, is provided.

According to a sixth aspect of the invention, an image-recording apparatus which includes an ejection unit that ejects the ink for ink-jet recording of the ink set of the second aspect by an ink-jet method, is provided.

According to a seventh aspect of the invention, a recorded material that is recorded with the ink for ink-jet recording according to the first aspect, is provided.

According to an eighth aspect of the invention, a recorded material that is recorded with the ink set according to the second aspect, is provided.

### BRIEF DESCRIPTION OF THE DRAWING

Fig.1 shows light transmission and absorption spectra of pigment dispersion liquids.

DETAILED DESCRIPTION OF THE INVENTION

Aaccording to methods described in JP-ANos. 2005-179506, 2003-113341 and 2003-128955, although a certain degree of transparency of images can be obtained, there is a problem that light resistance decreases as the result of lowering pigment particle size. Therefore, it is difficult to retain bright images for a long period of time. In particular, for example, in image-recording methods in which an image is fixed by irradiating light with high energy such as UV rays, light resistance to the light with high energy applied in the image fixation is also an issue.
The present invention has been made in view of the above circumstances.
Hereinafter, an ink for ink-jet recording, an ink set, an image-recording method, an image-recording apparatus, and a recorded material of the invention will be described.
The ink for ink-jet recording of the invention (hereinafter, it may be referred to as "the ink") contains at least one kind of colorant particles including a colorant and a dispersing agent, and at least one kind of polymer compound capable of forming a crosslinking bond by application of active energy rays, wherein the dispersion average particle diameter (hereinafter may be simply referred to as "average particle diameter") of the colorant particles is from 1 to 50 nm, and a value represented by a formula ($D_{90}$ - $D_{10}$) is 100 nm or less.
In the formula ($D_{90}$ - $D_{10}$), $D_{90}$ and $D_{10}$ represent, respectively, a particle diameter at which an integrated value of a particle diameter distribution function of the colorant particles which is represented by a formula dG = F(D)dD is 0.9 of the total number of colorant particles (90% by number), and 0.1 of the total number of colorant particles (10% by number), wherein G represents the number of particles, and D represents a particle diameter.
By setting the dispersion average particle diameter of the colorant particles within a specified range, and setting the value represented by the formula ($D_{90}$ - $D_{10}$) to a certain numerical value or less, it is possible to obtain a high velocity of the ink curing that is caused by forming a crosslinking bond by application of active energy rays, and to obtain images with high transparency.
Further, when using the ink for ink-jet recording of the invention with plural inks in combination, it is possible to obtain excellent curing efficiency of respective inks and a high curing velocity, and to obtain recorded materials that have an excellent hue and high brightness.
The reason thereof is not certain, but, for example, can be considered as follows. By making colorant particles contained in an ink fine, the transparency of the colorant particles increases and, moreover, the scattered-light component caused by the colorant particles decreases. Accordingly, scattering of active rays used for the image formation may be suppressed, and the energy is utilized more efficiently for the crosslinking and curing of the ink.
In particular, it can be considered that the colorant particles in the invention absorb a very small amount of light at short wavelength regions as compared with conventional colorant particles, and the energy of active rays is utilized more efficiently for the crosslinking and curing of the ink.
In addition, when performing the recording using plural inks including the ink of the present invention, since in the ink of the invention including colorant particles having a dispersion average particle diameter of 1 to 50 nm, the energy consumption and scattered component of active rays are reduced, the energy may be efficiently transferred to other inks. As the result, it is considered that an excellent curing velocity and curing efficiency may be obtained when the ink of the invention is used in an ink set in which the ink is used with a plurality of inks in combination.

[Colorant particle]

The colorant particles in the invention contain at least one kind of colorant and at least one kind of dispersing agent, and can contain other components when needed.

(Colorant)

As the colorant that may be used in the colorant particles in the invention, any colorant such as a pigment, a dye, colored fine particles or the like may be used so long as they have a function that an mage can be formed by coloring. Among these, organic pigments are preferably used from the standpoint of light resistance.
As the organic pigment that may be used in the colorant particles in the invention, any organic pigment may be used without particular limitation on the hue or the structure thereof. Examples thereof include perylene compound pigments, perynone compound pigments, quinacridone compound pigments, quinacridonequinone compound pigments, anthraquinone compound pigments, anthoanthorone compound pigments, benzimidazolone compound pigments, disazo condensation compound pigments, disazo compound pigments, azo compound pigments, indanthrone compound pigments, indanthrene compound pigments, quinophthalone compound pigments, quinoxalinedione compound pigments, metal complex azo compound pigments, phthalocyanine compound pigments, triarylcarbonium compound pigments, dioxazine compound pigments, aminoanthraquinone compound pigments, diketopyrrolopyrrole compound pigments, naphtonl AS compound pigments, thioindigo compound pigments, isoindoline compound pigments, isoindolinone compound pigments, pyranthrone compound pigments, isoviolanthrone compound pigments, and mixtures thereof.

More specifically, examples of organic pigments contained in yellow ink include C. I. Pigment Yellow 1 (Hanza Yellow), 2, 3 (Hanza Yellow 10G), 4, 5 (Hanza Yellow 5G), 6, 7, 10, 11, 12, 13, 14, 16, 17, 24 (Fravanthrone Yellow), 34, 35, 37, 53, 55, 65, 73, 74, 75, 81, 83, 93, 94, 95, 97, 98, 99, 108 (Anthrapyrimidine Yellow), 109, 110, 113, 117 (copper complex salt pigment), 120, 124, 128, 129, 133 (quinophthalone), 138, 139 (isoindolinone), 147, 151, 153 (nickel complex pigment), 154, 155, 167, 172, 180 and the like.

Each of these pigments may be used in one kind alone, or in two or more kinds in mixture or as a solid solution.

Among these, from the standpoint of applications to color printing, C. I. Pigment Yellow 128, C. I. Pigment Yellow 74, C. I. Pigment Yellow 110, Pigment Yellow 138, C. I. Pigment Yellow 151 and C. I. Pigment Yellow 155 are preferable, C. I. Pigment Yellow 128, C. I. Pigment Yellow 74, Pigment Yellow 138 and C. I. Pigment Yellow 155 are more preferable as colorants having a preferable hue and high tinting strength, and C. I. Pigment Yellow 74 is particularly preferable as it has high tinting strength and a hue similar to the hue of a colorant used for offset printing and the like.

Examples of organic pigments for magenta ink include C. I. Pigment Red 1 (Para Red), 2, 3 (Toluidine Red), 4, 5 (ITR Red), 6, 7, 8, 9, 10, 11, 12, 14, 15, 16, 17, 18, 19, 21, 22, 23, 30, 31, 32, 37, 38 (Pyrazolone Red), 40, 41, 42, 48 (Ca), 48 (Mn), 57 (Ca), 57:1, 88 (Thioindigo), 112 (Naphthol AS-based), 114 (Naphthol AS-based), 122 (dimethylquinacridone), 123, 144, 146, 149, 150, 166, 168 (Anthoanthorone Orange), 170 (Naphthol AS-based), 171, 175, 176, 177, 178, 179 (Perylene Maroon), 184, 185, 187, 202, 209 (dichloroquinacridone), 219, 224 (perylene-based), 245 (Naphthol AS-based), 254, C. I. Pigment Violet 19 (quinacridone), 23 (Dioxazine Violet), 32, 33, 36, 38, 43, 50 and the like.

These pigments may be used in one kind alone, or in two or more kinds in mixture or as a solid solution.

Among these, C. I. Pigment Red 122, C. I. Pigment Red 202, C. I. Pigment Red 254 and C. I. Pigment Violet 19 are preferable as colorants having a preferable hue and high tinting strength, and C. I. Pigment Red 122 and C. I. Pigment Violet 19 are particularly preferable as they have high tinting strength and a hue similar to the hue of colorants used for offset printing and the like.

Examples of organic pigments for cyan ink include C. I. Pigment Blue 1, 2, 3, 15, 15:1, 15:2, 15:3, 15:34, 15:4, 16 (metal-free phthalocyanine), 18 (Alkali Blue Toner), 22, 25, 60 (Threne Blue), 65 (violanthrone), 66 (indigo), C. I. Vat Blue 4, 60 and the like.

These pigments may be used in one kind alone, or in two or more kinds in mixture or as a solid solution.

Among these, copper phthalocyanine-based pigments are preferable as colorants having a preferable hue and high tinting strength, C. I. Pigment Blue 1, 2, 3, 15, 15:1, 15:2, 15:3, 15:34, 15:4 are more preferable, and C. I. Pigment Blue 15:3 and C. I. Pigment Blue 15:4 are particularly preferable as they have high tinting strength and a hue similar to hue of colorants used for offset printing and the like.

Examples of organic pigments for black ink include black organic pigments such as Aniline Black (C.I. Pigment Black 1).

Further, for the ink for ink-jet recording of the invention, an inorganic pigment may be used in place of the organic pigment.

Examples of inorganic pigments used for black include carbon black.

Furthermore, examples of organic pigments which may be used for color inks other than magenta, cyan and yellow inks include C. I. Pigment Green 7 (Phthalocyanine Green), 10 (Green Gold), 36, 37; C. I. Pigment Brown 3, 5, 25, 26; and C. I. Pigment Orange 1, 2, 5, 7, 13, 14, 15, 16, 24, 34, 36, 38, 40, 43, 63 and the like.

In the ink for ink-jet recording according to the invention, it is possible to use colorant particles containing one kind of the above-described colorants or two or more kinds in combination.

In addition, the ink according to the invention may contain an achromatic inorganic pigment.

The dispersion average particle diameter of the colorant particles in the invention is from 1 to 50 nm. Unless otherwise specified, the dispersion average particle diameter in the invention means an average particle diameter obtained by a dynamic light scattering method as described below, and is a value measured with a particle size analyzer FPAR-1000 (trade name; manufactured by Ohtsuka Electronics Co., Ltd.).

In the invention, the dispersion average particle diameter of the colorant particles is more preferably from 1 to 40 nm from the standpoint of improving the curing velocity of the ink when irradiating active rays, and is particularly preferably from 1 to 30 nm from the standpoint of further improving the curing velocity and improving the transparency of recorded materials.

When the dispersion average particle diameter of the colorant particles is within this range, the ink can be cured particularly fast when irradiated with active rays, and the recorded materials with high transparency can be produced. Further, also in the case where the ink is used with plural inks in combination, excellent curing velocity of the inks can be obtained and the recorded materials with high fixing properties and abrasion resistance can be obtained. Here, when a dispersion average particle diameter is less than 1 nm, it is difficult to maintain a stable dispersion state in the ink for a long period of time. In addition, the light resistance decreases. On the other hand, when it exceeds 50 nm, good transparency cannot be obtained, and the curing velocity and the curing efficiency of the ink decrease.

[Average particle diameter by the dynamic light scattering method]

As described above, in the invention, unless otherwise specified, the dispersion state of the colorant is evaluated by a dynamic scattering method, by which the dispersion average particle diameter of the colorant particles is calculated. The principle thereof is as follows. Particles having a particle diameter in a range from about 1 nm to 5 μm change momentarily the position and orientation due to the Brownian motion such as translation and rotation in a liquid. Accordingly, when irradiating laser light to these particles and detecting output scattered light, the fluctuation of the scattered light intensity depending on the Brownian motion is observed. By monitoring the fluctuation of the scattered light intensity over time, the velocity of the Brownian motion (diffusion coefficient) of particles can be obtained, and, consequently, the dispersion particle diameter (the size of secondary particles in a dispersed state) can be determined.

[Average primary particle diameter by the observation with a transmission electron microscope]

Further, in the invention, the average primary particle diameter of the colorant particles contained in the ink can also be calculated as follows by observing the figure of the particle with a transmission electron microscope (TEM). The ink containing the colorant particle is diluted, and the diluted ink is then mounted on a Cu 200 mesh adhered with a carbon membrane, and dried. From an image photographed at a magnification of 100,000 with a TEM (1200EX, manufactured by JEOL Ltd.), the diameters of 300 particles are measured and an average value is obtained.
On this occasion, since the ink is dried on the Cu 200 mesh as described above, even when the colorant particles are in a good dispersion state in the ink, occasionally colorant particles may apparently agglutinate during the drying process, with which it is difficult to determine an accurate particle diameter. In this case, the diameter of independent 300 particles which are not stacked up each other is measured and an average value is obtained. When the colorant is not spherical, the major axis of a particle (the longest axis of a particle) is measured.
In the invention, preferably the dispersion average particle diameter obtained by the dynamic light scattering method on the colorant particles in a dispersion medium is in a range of ± 20 nm of the average primary particle diameter obtained by the TEM observation, more preferably ± 15 nm of the average primary particle diameter determined by the TEM observation, and furthermore preferably ± 10 nm of the average primary particle diameter obtained by the TEM observation. When the dispersion average particle diameter obtained by the dynamic light scattering method is within this range, the colorant particles may disperse well in a dispersion medium, and the effect of the invention can be expressed sufficiently.
In the ink for ink-jet recording of the invention, the colorant particles included in the ink contain one or more kinds of colorants (such as a pigment) and one or more kinds of dispersing agent, and the colorant particles may contain a compound(s) other than the pigment and the dispersing agent. In the colorant particle, a part having a crystalline structure and a part not having a crystalline structure may coexist. Further, the colorant particle may be configured such that a pigment and/or another compound(s) form a core of the particle, and the above-described dispersing agent (such as a polymer compound or a surfactant) is adsorbed on the core so as to cover the core.
In the invention, from the standpoint of light resistance, the colorant particles preferably have a crystalline structure.
Here, the condition of "having a crystalline structure" is neither (i) nor (ii) described below when the colorant particle contained in the ink is subjected to powder X-ray diffraction analysis:

(i) halo specific for amorphous structure is observed;
(ii) a crystallite diameter determined by a measuring method described below is less than 2 nm (20 A), or presumed to be in an amorphous state.

In the invention, a crystallite diameter is measured and calculated as follows.
Firstly, X-ray diffraction analysis is performed using Cu-Kα1 ray. Next, the half-width of a peak that shows the greatest intensity, or a peak that is separable from neighboring peaks and shows sufficiently great intensity in the range of 2θ = 4 degrees to 70 degrees is measured, then the crystallite diameter is calculated by the Sherrer's formula below.

$$D = K \times \lambda / (\beta \times \cos\theta) \qquad \text{Sherrer's formula}$$

In the Sherrer's formula as described above, D represents a crystallite diameter (nm, the size of a crystallite), λ represents a X-ray wavelength (nm) used in the measurement, β represents spread of the diffraction ray based on the size of the crystal (radian), θ represents the Bragg angle of the diffraction ray (radian), and K represents a constant number which changes depending on β and D.
It is known that K is equal to the value 0.9 when the half-width β/2 is used for β. Since the wavelength of the

Cu-Kα1 ray is 0.154050 nm (1.54050 A), the crystallite diameter D (nm) in the invention is calculated based on the formula below:

$$D = 0.9 \times 0.154050/(\beta/2 \times \cos\theta)$$

When the peak of a spectrum obtained by the measurement is broad and the half-width of the peak cannot be determined, it is presumed that the crystallite diameter is less than 2 nm (microcrystalline state) or in an amorphous (noncrystalline) state.

In the ink of the invention, the crystallite diameter of the colorant particles contained in the ink, which is calculated by the above-described method, is preferably 0.9 nm (9 Å) or greater from the standpoint of enhancing the light resistance, more preferably 5 nm (50 Å) or greater, and particularly preferably 8 nm (80Å) or greater from the standpoint of further enhancing the light resistance and maintaining the transparency. The upper limit of the crystallite diameter is preferably no greater than the average primary particle diameter calculated based on the TEM observation (or SEM (scanning electron microscope) observation).

(Monodispersibility of the colorant particles)

In the invention, it is preferable that the particle diameters of the colorant particles dispersed in a dispersion medium are in a monodisperse state (the particle size distribution of the particles is narrow).

When the colorant particles contained in the ink are in the monodisperse state, the influence of the light scattering and the like caused by particles having a large particle diameter can be reduced. In addition, for example, when forming aggregates in printing or recording using the ink, the packing configuration of formed aggregates can be advantageously controlled.

As an index for evaluating the dispersibility of the ink, for example, the difference between $D_{90}$ and $D_{10}$ ($D_{90}$ - $D_{10}$) can be used, where, in the particle diameter distribution obtained by the dynamic light scattering method, $D_{90}$ is such a particle diameter that the number of particles of the colorant particles having a particle diameter of $D_{90}$ or less occupies 90% by number of the total number of the colorant particles, and $D_{10}$ is such a particle diameter that the number of particles of colorant particles having a particle diameter of the $D_{10}$ or less occupies 10% by number of the total number of the colorant particles.

In the invention, the difference between $D_{90}$ and $D_{10}$ is 100 nm or less from the standpoint of reducing the scattered component of printed portions and enhancing the transparency. The difference between $D_{90}$ and $D_{10}$ is preferably from 1 nm to 70 nm from the standpoint of improving the curing velocity and the curing efficiency of the ink, and is particularly preferably from 1 nm to 50 nm from the standpoint of forming brilliant secondary and tertiary colors and enhancing printing density. Unless otherwise specified, the values $D_{90}$ and $D_{10}$ are the values obtained by the dynamic light scattering method as described above, and are the values measured with a particle size analyzer FPAR-1000 (trade name; manufactured by Ohtsuka Electronics Co., Ltd.).

When the dispersion average particle diameter of the colorant particles is from 1 to 50 nm, as is the case for the invention, the above-described effect is particularly remarkable.

In the formula, the narrower the particle size distribution, the closer to 0(zero) the difference between the $D_{90}$ and the $D_{10}$. On the other hand, the broader the particle size distribution, that is, the higher the polydispersity, the greater the difference between the $D_{90}$ and the $D_{10}$.

In particular, the aforementioned monodispersibility of the colorant particles largely contributes to the reduction in absorption of light in the short wavelength region by the colorant particle. Therefore, when the difference between $D_{90}$ and $D_{10}$($D_{90}$ - $D_{10}$) is within the above-described range, the curing velocity may become very fast. When the difference between the $D_{90}$ and $D_{10}$ exceeds 100 nm, the scattered component in the ink liquid increases, and then the curing velocity and curing efficiency of the ink decrease.

In the ink of the invention, it is preferable that the amount of coarse particles or coarse secondary aggregates (which are the aggregates of primary particles) contained in respective inks is small. Among the colorant particles contained in respective inks, the number of colorant particle having a particle diameter of 0.8 μm or more may be 1.2 $\times 10^7$ particles /ml or less from the standpoint of abrasion resistance, preferably 1.0 $\times 10^7$ particles /ml or less, particularly preferably 0.8 $\times 10^7$ particles/ml or less from the standpoint of ejection stability and enhancement of the curing velocity.

The number of the colorant particles having a particle diameter of 0.8 μm or more is obtained by counting the number of coarse particles having a particle diameter of 0.8 μm or more in a certain area of a film obtained by bar-coating in a thickness of 3 μm, with an optical microscope at a magnification of 5,000 and converting the counted number to a number in 1 ml of the ink.

In the invention, for the colorant particles, the dispersion average particle diameter may be controlled by selecting

the kind of the pigment, the kind of the dispersing agent and dispersion conditions, and the number of coarse particles may suitably be controlled by filtration conditions (such as the selection of a filter, multistage filtration, and with or without centrifugation).

The ink in the ink set of the invention contains the aforementioned colorant particle, and the colorant particle is preferably a water-dispersible pigment.

Specific examples of the water-dispersible pigment include the following pigments (1) to (5).

(1) Encapsulated pigment: that is, a polymer emulsion formed by incorporating a pigment in polymer fine particles. More specifically, the encapsulated pigment is formed by coating a pigment with a hydrophilic water-insoluble resin to hydrophilize the pigment by the resin layer on the pigment surface, and dispersing the coated pigment in water.
(2) Self-dispersible pigment: that is, a pigment that has at least one kind of hydrophilic group on the surface and exhibits at least either of water dispersibility or water solubility in the absence of a dispersing agent. More specifically, the self-dispersible pigment is formed by subjecting a pigment, for example, mainly carbon black, to a surface oxidation treatment to hydrophilize, thereby making the pigment dispersible in water as a pigment single body.
(3) Resin-dispersed pigment: that is, a pigment dispersed with a water-soluble polymer compound having a weight-average molecular weight of 50,000 or less.
(4) Surfactant-dispersed pigment: that is, a pigment dispersed with a surfactant.
(5) Dispersed pigment produced by dissolving an organic pigment and a polymer dispersing agent or a polymer compound as a dispersing agent in an aprotic organic solvent in the presence of an alkali, and then mixing the liquid with water to produce a pigment dispersion liquid (hereinafter, the dispersed pigment produced by the method is described as "the built-up pigment").

Preferable examples as the pigment in the invention include the (1) encapsulated pigment, the (2) self-dispersible pigment, and the (5) built-up pigment. As particularly preferable examples, the (1) encapsulated pigment and the (5) built-up pigment can be mentioned.
Further, for the purpose of obtaining a dispersion liquid of the aforementioned water-insoluble colorant particle having a dispersion average particle diameter of 5 to 50 nm, the (5) built-up pigment is preferably used.
The use of the (5) built-up pigment is preferable, since when the built-up pigment is used, it is possible to obtain particles having a small particle diameter and being monodispersed, and, further, it is possible to obtain a pigment dispersion liquid containing a very small amount of coarse particles or coarse secondary aggregates (which are the aggregates of primary particles). In addition, the (5) built-up pigment is preferable since it may exhibit excellent light resistance as compared with the (1) to (4), although the reasons thereof are unclear.

The encapsulated pigment will be described in detail. A resin used for the encapsulated pigment is not limited, but it is preferably a polymer compound having a self-dispersion capability or dissolution capability in a mixed solvent of water and a water-soluble organic solvent, and having an anionic group (acidic group).
The resin preferably has a number average molecular weight within the range of around 1,000 to 100,000, and more preferably the number average molecular weight within the range of around 3,000 to 50,000, from the standpoint of obtaining fine pigment particles and dispersion stability. Further, a resin that dissolves in an organic solvent to form a solution is preferable.
When the number average molecular weight of the resin is within the range, functions as a coating film for pigments, or as a coating film in inks can sufficiently be exerted. The resin is preferably used in a form of an alkali metal salt or an organic amine salt.

Specific examples of resins for the encapsulated pigment include materials having an anionic group, for example, thermoplastic, thermo-curable, or modified acrylic-based, epoxy-based, polyurethane-based, polyether-based, polyamide-based, unsaturated polyester-based, phenol-based, silicone-based and fluorine-containing polymer compounds; polyvinyl-based resins such as vinyl chloride, vinyl acetate, polyvinyl alcohol and polyvinyl butyral; polyester-based resins such as alkyd resin and phthalic resin; amino-based materials such as melamine resin, melamine-formaldehyde resin, aminoalkyd co-condensed resin and urea resin; and copolymers and mixtures thereof.
Among these resins, the anionic acrylic-based resin can be obtained, for example, by polymerizing an acrylic monomer having an anionic group (hereinafter, referred to as an anionic group-containing acrylic monomer), and, further, another monomer copolymerizable with these monomers, when needed, in an solvent.
Examples of anionic group-containing acrylic monomers include acrylic monomers having one or more anionic groups selected from the group consisting of a carboxyl group, a sulfonic acid group and a phosphonic group. Among these, acrylic monomers having a carboxyl group are particularly preferable.

Specific examples of acrylic monomers having a carboxyl group include acrylic acid, methacrylic acid, crotonic acid, ethacrylic acid, propylacrylic acid, isopropylacrylic acid, itaconic acid and fumaric acid. Among these, acrylic acid and methacrylic acid are preferable.

The encapsulated pigment can be manufactured by conventional physical and chemical methods with the use

of the aforementioned components. In the invention, preferably it is manufactured by the methods disclosed in JP-A Nos. 9-151342, 10-140065, 11-209672, 11-172180, 10-25440 or 11-43636.

In the invention, the self-dispersible pigment may also be mentioned as a preferable example. The self-dispersible pigment is a pigment formed by bonding many hydrophilic functional groups and/or salts thereof (hereinafter, referred to as a dispersibility-providing group) to the surface of a pigment directly or indirectly via an alkyl group, an alkylether group, aryl group or the like to be made dispersible in an aqueous medium without a dispersing agent.
Here, the phrase "dispersible in an aqueous medium without a dispersing agent" means that dispersion in an aqueous medium can be achieved even when a dispersing agent for dispersing the pigment is not used.
An ink that contains the self-dispersible pigment as a colorant is not required to contain such a dispersing agent which is used for ordinary pigments, and, therefore, it is possible to easily prepare an ink in which foam formation due to the lowering of defoaming property caused by the dispersing agent scarcely occur, and which is excellent in ejection stability.
Examples of dispersibility-providing groups, which are bonded to the surface of a pigment to make a self-dispersible pigment, include -COOH, -CO, -OH, $-SO_3H$, $-PO_3H_2$, and quaternary ammonium and salts thereof.

The self-dispersible pigments containing any of these dispersibility-providing group(s) or active species having the dispersibility-providing group are manufactured by subjecting a pigment that is a raw material to a physical treatment or a chemical treatment, thereby bonding (grafting) the dispersibility-providing group or the active species having the dispersibility-providing group to the surface of the pigment.
Examples of the physical treatment include a vacuum plasma treatment and the like. Examples of the chemical treatment include a wet oxidation method in which the pigment surface is oxidized with an oxidant in water, and a method in which p-aminobenzoic acid is bonded to the surface of a pigment, thereby bonding a carboxyl group via a phenyl group.

In the invention, preferable examples of the self-dispersible pigment include a self-dispersible pigment that is surface-treated by an oxidation treatment with hypohalous acid and/or a hypohalous acid salt, or by an oxidation treatment with ozone.
As the self-dispersible pigments, commercially available products may be used. Examples thereof include MICROJET CW-1 (trade name; manufactured by Orient Chemical Industries), and CAB-O-JET200 and CAB-O-JET300 (trade names; manufactured by Cabot Corporation).

As dispersing agents that may be used in the (1) encapsulated pigment or (3), resin-dispersed pigment in the invention, nonionic compounds, anionic compounds, cationic compounds, amphoteric compounds and the like can be mentioned.
For example, copolymers of a monomer having an $\alpha,\beta$-ethylenically unsaturated group are mentioned. Examples of monomers having an $\alpha,\beta$-ethylenically unsaturated group include ethylene, propylene, butene, pentene, hexene, vinyl acetate, allyl acetate, acrylic acid, methacrylic acid, crotonic acid, crotonic acid ester, itaconic acid, itaconic acid monoester, maleic acid, maleic acid monoester, maleic acid diester, fumaric acid, fumaric acid monoester, vinylsulfonic acid, styrenesulfonic acid, sulfonated vinylnaphthalene, vinyl alcohol, acrylamide, methacryloxyethyl phosphate, bismethacryloxyethyl phosphate, methacryloxyethylphenyl acid phosphate, ethylene glycol dimethacrylate, diethylene glycol dimethacrylate, styrene, styrene derivatives such as $\alpha$-methylstyrene and vinyl toluene, vinyl cyclohexane, vinyl naphthalene, vinyl naphthalene derivatives, acrylic acid alkyl ester in which an aromatic group may be substituted, acrylic acid phenyl ester, methacrylic acid alkyl ester in which an aromatic group may be substituted, methacrylic acid phenyl ester, methacrylic acid cycloalkyl ester, crotonic acid alkyl ester, itaconic acid dialkyl ester, maleic acid dialkyl ester, vinyl alcohol, and derivatives of aforementioned compounds.

Homopolymers of the monomer having an $\alpha,\beta$-ethylenically unsaturated group or copolymers obtained by copolymerizing plural kinds of monomers having an $\alpha,\beta$-ethylenically unsaturated group may be used as a polymer dispersing agent. Specific examples thereof include acrylic acid alkyl ester-acrylic acid copolymer, methacrylic acid alkyl ester-methacrylic acid copolymer, styrene-acrylic acid alkyl ester-acrylic acid copolymer, styrene-methacrylic acid phenyl ester-methacrylic acid copolymer, styrene-methacrylic acid cyclohexyl ester-methacrylic acid copolymer, styrene-styrene sulfonic acid copolymer, styrene-maleic acid copolymer, styrene-methacrylic acid copolymer, styrene-acrylic acid copolymer, vinylnaphthalene-maleic acid copolymer, vinylnaphthalene-methacrylic acid copolymer, vinylnaphthalene-acrylic acid copolymer, polystyrene, polyester and polyvinyl alcohol.
The dispersing agent preferably has a weight-average molecular weight of 2,000 to 60,000.
The ratio of an addition amount of the dispersing agent relative to the pigment is preferably in the range from 10% to 100% in the mass ratio, more preferably from 20% to 70%, furthermore preferably 40% to 50%, from the standpoint of the stability of pigment dispersion.

Next, the built-up pigment will be described in detail.

The built-up pigment can be manufactured by a method including the following processes (1) to (3), or by a method further including the following processes (4) and (5), in a solid form or in a dispersed form.

The built-up pigment in the invention may preferably be manufactured by the steps of:

(1) forming a solution by dissolving a water-insoluble colorant (organic pigment) and a dispersing agent in an aprotic water-soluble organic solvent in the presence of an alkali;
(2) mixing the solution with a water-based medium to obtain a dispersion composition by dispersing the particle of the water-insoluble colorant and the dispersing agent in a medium containing water;
(3) forming a soft aggregate in which particles of the water-insoluble colorant are aggregated in a re-dispersible state and separating the soft aggregate from the dispersion composition;
(4) filtrating and washing the soft aggregate with an ester-based solvent or a ketone-based solvent; and
(5) loosening the aggregation of the soft aggregate to be re-dispersed in a re-dispersion medium.

Regarding the aprotic solvent in the invention, any solvents may be used so long as they dissolve the organic pigment and the polymer compound in the presence of an alkali. Meanwhile, ones having a solubility of 5% by mass or more relative to water are preferably used, and ones that mix freely with water are more preferable.

Specifically, examples of preferable solvents include dimethylsulfoxide, dimethylimidazolidinone, sulfolane, N-methylpyrrolidone, dimethylformamide, acetonitrile, acetone, dioxane, tetramethyl urea, hexamethylphosphoramide, hexamethylphosphorotriamide, pyridine, propionitrile, butanone, cyclohexanone, tetrahydrofuran, tetrahydropyran, ethylene glycol diacetate and γ-butyrolactone. Among these, dimethylsulfoxide, N-methylpyrrolidone, dimethylformamide, dimethylimidazolidinone, sulfolane, acetone, acetonitrile and tetrahydrofuran are preferable. They may be used in one kind alone or in two or more kinds in combination.

No particular limitation is imposed on ratio of the aprotic solvent used, but, for the purpose of achieving better dissolution state of the pigment, easier formation of an intended fine particle diameter and better color density of the aqueous dispersion composition, the solvent is used preferably in a range from 2 to 500 parts by mass relative to 1 part by mass of pigment, more preferably in a range from 5 to 100 parts by mass relative to 1 part by mass of pigment.

As an alkali to be incorporated in the aprotic solvent, examples thereof include an inorganic base such as sodium hydroxide, calcium hydroxide and barium hydroxide; and organic bases such as trialkylamine, diazabicycloundecene (DBU) and metal alkoxide. Among these, the use of an inorganic base is preferable. No particular limitation is imposed on the amount of the alkali to be incorporated. In the case of the inorganic base, it is preferably 1.0 to 30 molar equivalents relative to the pigment, more preferably 2.0 to 25 molar equivalents, particularly preferably 3 to 20 molar equivalents. In the case of organic bases, it is preferably 1.0 to 100 molar equivalents relative to the pigment, more preferably 5.0 to 100 molar equivalents, particularly preferably 20 to 100 molar equivalents.

In the invention, a water-based solvent means water alone or a mixed solvent of water and a water-soluble organic solvent. The organic solvent is preferably added in such cases that water alone is insufficient for uniformly dissolving the pigment and the dispersing agent, or water alone is insufficient for obtaining a viscosity needed for flowing in flow channels. As alkaline organic solvents, for example, amide-based solvents and sulfur-containing solvents are preferable, sulfur-containing solvents are more preferable, and dimethylsulfoxide (DMSO) is particularly preferable. As acidic solvents, carboxylic acid-based solvents, sulfur-based solvents and sulfonic acid-based solvents are preferable, sulfonic acid-based solvents are more preferable, and methane sulfonic acid is particularly preferable. In the water-based solvent, a salt of inorganic compound, a dispersing agent described later and the like may be dissolved when needed.

In the process (2), the method of mixing a solution in which a water-insoluble colorant is uniformly dissolved with a water-based solvent is not particularly limited. Examples thereof include: a method in which the water-based solvent is stirred and thereto, a solution of the water-insoluble colorant is added; and a method in which both the solution and water-based solvent are supplied into a flow channel having a certain length in the same longitudinal direction, and allowing both liquids to contact with each other during passing through the flow channel to precipitate fine particles of the organic pigment. For the former (the method of stirring and mixing), in particular, a method using submerged addition in which the solution of a water-insoluble colorant is added through a supply pipe or the like into that have been introduced in the water-based solvent is preferable. More specifically, the submerged addition can be performed using an apparatus described in WO 2006/121018, paragraphs 0036 to 0047. For the latter (the method of mixing the both (the solution and the water-based solvent) using a flow channel), for example, a microreactor described in JP-A No. 2005-307154, paragraphs 0049 to 0052 and Figs. 1 to 4, or JP-ANo. 2007-39643, paragraphs 0044 to 0050 can be used.

No particular limitation is imposed on conditions for precipitating and generating particles of the water-insoluble colorant, and a condition in a range from ordinary pressure to subcritical pressure or supercritical pressure can be selected. The temperature under ordinary pressure is preferably from -30 to 100°C, more preferably from -10 to 60°C, particularly preferably from 0 to 30°C. The mixing ratio of the solution of the water-insoluble colorant to the water-based solvent (solution of the water-insoluble colorant/water-based solvent) is preferably from 1/50 to 2/3 in volume ratio, more preferably from 1/40 to 1/2, particularly preferably from 1/20 to 3/8.

No particular limitation is also imposed on the particle concentration in the mixed liquid when particles are precipitated. The particle of the water-insoluble colorant is preferably in the range from 10 to 40000 mg relative to 1000 ml of the solvent, more preferably in the range from 20 to 30000 mg, particularly preferably in the range from 50 to 25000 mg.

In the preparation of the built-up pigment, as the dispersing agent, a dispersing agent that is soluble in an aprotic organic solvent in the presence of an alkali, and can give a dispersion effect by forming pigment-containing particles in the water-based solvent when mixing the solution in which the water-insoluble colorant and the dispersing agent are dissolved with the water-based solvent may be suitably used.

The dispersing agent is preferably a surfactant or polymer compound which includes a hydrophilic portion containing one or more of a carboxylic acid group, a sulfonic acid group, a phosphoric acid group, a hydroxyl group and alkylene oxide. The dispersing agent is more preferably a dispersing agent that stably dissolves in the aprotic organic solvent along with the organic pigment in the presence of alkali. When the hydrophilic portion of the dispersing agent include only the group(s) other than those described as above, such as a primary, secondary or tertiary amino group, or a quaternary ammonium group, the degree of dispersion stability may occasionally be relatively decreased in an alkali-containing aqueous dispersion composition of an organic pigment, although it is sufficient.

In conventional methods for dispersing pigments, measures such as selecting a dispersing agent capable of efficiently contacting with a pigment surface in a dispersion state in a medium are required. In contrast, in the method for preparing the built-up pigment in the invention, since both dispersing agent and pigment exist in a dissolved state in a medium and an intended action between these can be obtained easily, no limitation is imposed on the dispersing agent based on the contact efficiency to the pigment surface, as compared with conventional pigment dispersion methods. Therefore, wide-ranging dispersing agents can be used.

The surfactant can suitably be selected, specifically, from conventionally publicly known surfactants and derivatives thereof, including anionic surfactants such as alkyl benzene sulfonate, alkyl naphthalene sulfonate, higher fatty acid salt, higher fatty acid ester sulfonate, sulfuric acid ester salts of higher alcohol ether, higher alcohol ether sulfonate, higher alkyl sulfonamide alkylcarboxylate and alkylphosphate; nonionic surfactants such as polyoxyethylene alkyl ether, polyoxyethylene alkyl phenyl ether, polyoxyethylene fatty acid ester, sorbitan fatty acid ester, ethylene oxide adduct of acetylene glycol, ethylene oxide adduct of glycerin, and polyoxyethylene sorbitan fatty acid ester; amphoteric surfactants such as alkylbetaine and amidobetaine; silicon-containing surfactants and fluorine-containing surfactants.

Specific examples of the polymer dispersant include polyvinyl pyrrolidone, polyvinyl alcohol, polyvinyl methyl ether, polyethylene oxide, polyethylene glycol, polypropylene glycol, polyacrylamide and the like. Among the above polymer dispersant, polyvinyl pyrrolidone may be preferably used.

In addition, examples of other polymer compounds which may be used as the dispersing agent include a block copolymer, a random copolymer, a graft copolymer, a modified product thereof, a salt thereof and the like constituted of at least two monomers (at least one of these is a monomer having a functional group selected from a group consisting of a carboxylic acid group, a sulfonic acid group, a phosphoric acid group, a hydroxyl group and an alkylene oxide) selected from styrene, styrene derivatives, vinylnaphthalene, vinylnaphthalene derivatives, aliphatic alcohol ester and the like of $\alpha$,$\beta$-ethylenic unsaturated carboxylic acid, acrylic acid, acrylic acid derivatives, methacrylic acid, methacrylic acid derivatives, maleic acid, maleic acid derivatives, alkenyl sulfonic acid, vinylamine, allylamine, itaconic acid, itaconic acid derivatives, fumaric acid, fumaric acid derivatives, vinyl acetate, vinyl sulfonic acid, vinyl pyrrolidone, acrylamide, N-vinyl acetamide, N-vinyl formamide and derivatives thereof, and the like.

In more detail, the polymer compound in the invention is preferably configured to have a hydrophilic portion and a hydrophobic portion, and the use of a copolymer formed by copolymerizing a hydrophilic monomer component and a hydrophobic monomer component is preferable. When a polymer compound that is a polymer constituted of a hydrophobic monomer component alone is used, occasionally it may be difficult to give good dispersion stability to the water-insoluble colorant. Meanwhile, the hydrophilicity is a property of large affinity to water, which results in good solubility in water, and hydrophobicity is a property of small affinity to water, which results in poor solubility in water.

As the hydrophobic monomer component, examples thereof include a monomer component having, as a structural unit, a hydrophobic unit such as an isobutyl group, a t-butyl group, a phenyl group, a biphenyl group, a naphthyl group. From the standpoint of giving high dispersion stability to the water-insoluble colorant, a block segment having a hydrophobic monomer such as styrene and t-butyl methacrylate as a repeating unit is preferable, but the hydrophobic monomer is not limited to these.

As the hydrophilic monomer component, examples thereof include monomer components containing a hydrophilic unit, as a unit structure, such as aforementioned anionic groups such as a carboxylic acid group, a sulfonic acid group and phosphoric acid group; cationic groups such as a primary amino group, a secondary amino group, a tertiary amino group, a quaternary ammonium group and imino group (-NH- group and =NH group); and structures having a functional group such as a hydroxyl group and an alkylene oxide. Among these, from the standpoint of improving the dispersion stability by the charge repulsion effect between water-insoluble colorant particles, it is preferable to have an anionic group such as a carboxylic acid group, a sulfonic acid group or a phosphoric acid group; or a cationic group such as a primary amino group, a secondary amino group, a tertiary amino group, a quaternary ammonium group or an imino group (-NH- group and =NH group) as a unit structure. From the standpoint of improving long-term stability of a dispersion liquid and image-fixing property when used as an ink, in particular, having a carboxylic acid group as a unit structure is preferable. Specific examples thereof include acrylic acid and methacrylic acid or carboxylic acid salts such

as inorganic salts and organic salts thereof, polyethylene glycol macromonomer, vinyl alcohol, 2-hydroxyethyl methacrylate and the like, but the hydrophilic monomer component is not limited to these.

The aforementioned copolymer may be a copolymer having any form of block copolymer, random copolymer, graft copolymer and the like. In particular, the use of block copolymer or graft copolymer is preferable because it is easy to give good dispersibility to the water-insoluble colorant.

Examples of polymer compounds which may preferably be used as other dispersing agents include natural polymer compounds such as albumin, gelatin, rosin, shellac, starch, gum arabic and sodium alginate, and modified products thereof. These dispersing agents may be used in one kind alone or in two or more kinds in combination.

No particular limitation is imposed on the use ratio of the dispersing agent, but it is preferably used in a range from 0.05 parts by mass or more, relative to 1 part by mass of the water-insoluble colorant (particularly, organic pigment), and 50 parts by mass or less relative to 100 parts by mass of the aprotic organic solvent.

By mixing the dispersing agent in 50 parts by mass or less relative to 100 parts by mass of the aprotic organic solvent, the dispersing agent can completely be dissolved easily. When it is less than 0.05 parts by mass relative to 1 part by mass of the organic pigment, occasionally it may be difficult to obtain sufficient dispersion effect.

In the ink of the invention, when taking the improvement of weather resistance into consideration, the aforementioned dispersing agents may favorably be used, however, from the standpoint of further improving the weather resistance and maintaining a low viscosity even when the density of the dispersion composition is made high, the use of a polymer dispersing agent or polymer compound that is soluble or dispersible in a specified organic solvent, which is used for a washing treatment described later, is particularly preferable.

No particular limitation is imposed on the molecular weight of the polymer dispersing agent or the polymer compound, but the weight-average molecular weight is preferably 500 to 1,000,000, more preferably 1,000 to 1,000,000. The molecular weight being less than 500 is too small, and the molecular weight exceeding 1,000,000 may result in too much entanglement between polymer chains, therefore, it may be difficult to exert the function as the dispersing agent, and, occasionally a good dispersion state cannot be maintained.

The simple term of the "molecular weight" in the invention means a weight-average molecular weight, and the weight-average molecular weight is an average molecular weight in terms of polystyrene measured by gel permeation chromatography (carrier: tetrahydrofuran) unless otherwise specified.

The term "dispersion composition" means a composition in which predetermined fine particles are dispersed, and no limitation is imposed on the form thereof. The dispersion composition may be, for example, a liquid composition (dispersion liquid), a paste-like composition, a solid composition, or the like.

The amount of the dispersing agent to be incorporated in a solution in which the water-insoluble colorant dissolves is, in order to further improve uniform dispersibility of pigments and preservation stability, preferably in a range from 0.1 to 1000 parts by mass relative to 100 parts by mass of a pigment, more preferably in a range from 1 to 500 parts by mass, particularly preferably in a range from 10 to 250 parts by mass. When the content of the dispersing agent is not less than a certain amount, the dispersion stability of organic pigment fine particles is further improved. In the invention, no particular limitation is imposed on the amount of the dispersing agent contained in a dispersion composition, but 10 to 1000 parts by mass relative to 100 parts by mass of pigment is practical.

In the above-described dispersion composition, as described specifically below, it is preferable to subject a mixed liquid formed by precipitating water-insoluble colorant particles to acid treatment, for example, preferably a treatment in which an acid is added in forming an aggregate to allow the aggregate of particles to be formed.

The treatment using acid preferably includes processes of aggregating particles with acid, separating the same from a solvent (dispersion medium), concentrating the same, and removing the solvent and salt (acid). By making the system acidic, electrostatic repulsion by the acidic hydrophilic portion is reduced to allow particles to be aggregated.

As the acid to be used here, any one may be used so far as it can form aggregates of particles that are difficult to be precipitated and can effectively separate the aggrregates from the solvent in a state of slurry, paste, powder, particle, cake (lump), sheet, short fiber or flake..

Furthermore preferably, the utilization of acid capable of forming a water-soluble salt with alkali is favorable, wherein it is preferable that an acid itself has a high solubility in water. In order to effectively remove the salt, the amount of acid to be added is favorably as small as possible within a range that makes the aggregation of particles possible.

Specific examples thereof include hydrochloric acid, sulfuric acid, nitric acid, acetic acid, phosphoric acid, trifluoroacetic acid, dichloroacetic acid and methanesulfonic acid. Among these, hydrochloric acid, acetic acid and sulfuric acid are particularly preferable.

The aqueous dispersion liquid of pigment particles formed in an easily separable state by acid can easily be separated with a centrifugal separator, a filtration apparatus, a slurry solid-liquid separator and the like. On this occasion, the degree of removing the salt and solvent can be controlled by adding dilution water or increasing the repetition number of decantation and washing.

The aggregate obtained here may be used directly as paste or slurry with a high water content, or may be used as fine powder by being subjected to a drying method such as a spray dry method, a centrifugal drying method, a filtration

drying method, or freeze-drying method according to need.

In the aqueous dispersion composition, the water-insoluble colorant has a crystalline structure. In order to form the crystalline structure, the soft aggregate of particles are preferably contacted with an organic solvent.

As the organic solvent, ester-based solvents, ketone-based solvents, alcohol-based solvents, aromatic-based solvents and aliphatic-based solvents are preferable, ester-based solvents and ketone-based solvents are more preferable, and ester-based solvents are particularly preferable.

Examples of the ester-based solvent include ethyl acetate, ethyl lactate and 2-(1-methoxy)propyl acetate. Examples of the ketone-based solvent include acetone, methyl ethyl ketone, methyl isobutyl ketone and cyclohexanone. Examples of the alcohol-based solvent include methanol, ethanol and n-butanol. Examples of the aromatic-based solvent include benzene, toluene and xylene. Examples of the aliphatic-based solvent include n-hexane and cyclohexane. Ethyl acetate, acetone and ethyl lactate are preferable, and, among these, acetone and ethyl lactate are particularly preferable.

Although no particular limitation is imposed on the use amount of the organic solvent, for example, the use of 0.01 to 10000 parts by mass relative to 100 parts by mass of pigment is preferable. Although no particular limitation is imposed on the amount of the organic solvent contained in the aqueous dispersion composition in the invention, 0.0001 to 1% by mass is practical.

Although no particular limitation is imposed on a method for contacting the obtained aggregate with the organic solvent, a method that allows the aggregate to be separated from the organic solvent after the contact is preferable. Further, a method that allows the organic solvent to be separated while keeping a liquid state is preferable. For example, filtration with a filter is preferable.

Although the reason is not definite, by performing the contact treatment by the organic solvent, the crystallite diameter can be increased without increasing the particle diameter of a water-insoluble colorant particle contained in the dispersion composition.

In other words, the crystallinity of the water-insoluble colorant particle can be enhanced while maintaining the primary particle diameter of particles at precipitation. Furthermore, in a redispersion treatment described later, it is possible to redisperse in water or the like while maintaining the primary particle diameter of particles at the precipitation, consequently it is possible to maintain high dispersion stability. Further, by performing the above treatment, a low viscosity can be maintained even when the re-dispersion composition obtained by re-dispersion of aggregates has an increased concentration. Furthermore, when it is used as a recording liquid for ink-jet printing, it has a good ejection property.

It is supposed that these effects are expressed, for example, caused by liberating and removing an excessive dispersing agent contained in the dispersion composition by contacting the dispersion composition with the organic solvent and then separating these.

On this occasion, since the dispersing agent being near the surface of the water-insoluble colorant particle in the dispersion composition is strongly fixed to the water-insoluble colorant particle and thus the particle diameter of the water-insoluble colorant particle does not increase, and high dispersion stability is maintained while keeping the primary particle diameter at the precipitation of particles, even after the re-dispersion treatment as described later.

For the dispersion composition, further re-dispersing the aggregate is preferable. As the re-dispersion treatment, an alkali treatment can be mentioned.

That is, it is preferable that particles having been aggregated using acid are neutralized with alkali and re-dispersed in water or the like in the primary particle diameter at the precipitation of the particle. Since the salt and solvent have already been removed, a concentrated base containing a little impurity can be obtained.

Any alkali may be used here so long as it acts as a neutralizing agent for the dispersing agent having an acidic hydrophilic portion to enhance the solubility in water.

Specific examples thereof include various kinds of organic amines such as aminomethyl propanol, dimethylamino propanol, dimethylethanolamine, diethyltriamine, monoethanolamine, diethanolamine, triethanolamine, butyldiethanolamine and morpholine; alkali metal hydroxides such as sodium hydroxide, lithium hydroxide and potassium hydroxide, and ammonia. These may be used in one kind or in two or more kinds in combination.

No particular limitation is imposed on the use amount of the alkali so long as it is within a range that can stably re-disperse aggregated particles in water, however, since it may cause corrosion of various members when the re-dispersed composition is used for applications such as printing inks and inks for ink-jet printing, the use of an amount that gives pH of 6 to 12 is preferable, and pH of 7 to 11 is more preferable.

Further, corresponding to the dispersing agent used at precipitating particles, a method that differs from the alkali treatment may be employed. Examples thereof include a re-dispersion treatment using the aforementioned low molecular weight dispersing agent, polymer dispersing agent or a dispersion auxiliary agent.

Examples of the dispersing agent used at this time include SOLSPERSE series by Avecia, AJISPER series by Ajinomoto Fine-Techno, DISPERBYK series by BYK Chemie, and DISPARLON series and PLAAD series by Kusumoto Chemicals, Ltd. As the dispersion auxiliary agent, a synergist corresponding to various pigments may also be used. The synergist here means pigment derivative compounds having a skeleton similar to that of an organic pigment and a hydrophilic group and capable of improving the dispersibility of the organic pigment.

As dispersing apparatuses for use in the re-dispersion of pigments, examples thereof include a ball mill, a sand mill, an attriter, a roll mill, an agitator, a paint shaker, a HENSCHELL mixer, a colloid mill, an ultrasonic homogenizer, a pearl mill and a wet jet mill.

When re-dispersing aggregated particles, it is also possible to add a water-soluble organic solvent as a medium, so that the particles can be easily re-dispersed.

No particular limitation is imposed on specifically usable organic solvent, but examples thereof include lower alcohols such as methanol, ethanol, n-propanol, isopropanol, n-butanol, isobutanol, tert-butanol; aliphatic ketones such as acetone, methyl ethyl ketone, methyl isobutyl ketone, diacetone alcohol; ethylene glycol, diethylene glycol, triethylene glycol, glycerin, propylene glycol, ethylene glycol monomethyl or monoethyl ether, propylene glycol methyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, dimethylformamide, dimethylimidazolidinone, dimethylsulfoxide, and dimethylacetamide. These may be used in one kind or in two or more kinds in combination.

When re-dispersing pigment particles to form an aqueous dispersion liquid, the amount of water here is preferably from 99 to 20% by mass, more preferably from 95 to 30% by mass. The amount of the water-soluble organic solvent is preferably from 50 to 0.1% by mass, more preferably from 30 to 0.05% by mass.

When adding water, the above-described alkali and a water-soluble organic solvent to the aggregated particles, according to need, a stirring, mixing or dispersing apparatus may be used. When using a paste or slurry of an organic pigment which has a particularly high water content, no water may be added.

Further, heating, cooling or distillation may be performed for the purpose of improving the efficiency upon re-dispersion and removing a water-soluble organic solvent having become useless, an excessive alkali and the like.

The ink for ink-jet recording in the invention can be prepared by mixing at least one kind of the aforementioned colorant particles, at least one kind of active ray-crosslinkable polymer compound described later, and, according to need, any of various components such as a photopolymerization initiator, a sensitizer, a surfactant and a water-soluble medium, and uniformly dissolving or dispersing these.

In the ink of the invention, the colorant particles are preferably incorporated in an amount of 0.1 to 15% by mass.

Further, when the prepared ink contains an excessive amount of polymer compound or additive, these may be appropriately removed by a method such as centrifugation or dialysis to re-prepare an ink.

<Active ray-crosslinkable polymer compound>

The ink for ink-jet recording of the invention contains at least one kind of polymer compound capable of forming a crosslinking bond by application of an active energy ray (hereinafter, occasionally referred to as an "active ray-crosslinkable polymer compound").

As the active ray-crosslinkable polymer compound that can be used in the invention, polymer compounds having a hydrophilic main chain and a plurality of side chains that are bonded to the hydrophilic main chain and capable of crosslinking between side chains by irradiating an active energy ray (hereinafter, occasionally referred to simply as "active ray") are favorably mentioned.

As such compounds, there are mentioned those formed by introducing a modifying group such as a photodimerization type, a photodecomposition type, a photopolymerization type, a photomodification type or a photodepolymerization type, to a side chain of at least one kind of hydrophilic resin selected from the group consisting of saponified products of polyvinyl acetate, polyvinyl acetal, polyethylene oxide, polyalkylene oxide, polyvinyl pyrrolidone, polyacrylamide, polyacrylic acid, hydroxyethyl cellulose, methyl cellulose, hydroxypropyl cellulose, derivatives of these hydrophilic resins, and copolymers thereof.

In the invention, having a photopolymerization type crosslinkable group in the side chain is preferable from the standpoint of the sensitivity and the performance of generated images.

As the hydrophilic main chain, a saponified product of polyvinyl acetate is preferable from the standpoint of ease of the side chain introduction and handling, the polymerization degree of which is preferably from 200 to 4000, more preferably from 200 to 2000 from the standpoint of handling, furthermore preferably from 200 to 1700. The modification percentage of the side chain relative to the main chain is preferably from 0.3% by mole to 4% by mole, more preferably from 0.5% by mole to 4% by mole, furthermore preferably from 0.8% by mole to 4% by mole from the standpoint of reactivity.

By setting it to 0.3% by mole or more, crosslinkable property can be sufficiently ensured and the effect of the invention may become greater. On the other hand, by setting it to 4% by mole or less, a reasonable crosslinking density can be obtained to give good film strength.

As a photodimerization type modifying group that may be included in a side chain, a diazo group, a cynnamoyl group, a stilbazonium group, a stilquinolium group and the like are preferable.

As active ray-crosslinkable polymer compounds that have a photodimerization type modifying group introduced into the

side chain, examples thereof include photosensitive resins (composition) described in official gazettes such as JP-A No. 60-129742.
As the active ray-crosslinkable polymer compound, examples thereof include compounds represented by formula (1) below in which a stilbazonium group is introduced into a polyvinyl alcohol structure are mentioned.

Formula (1)

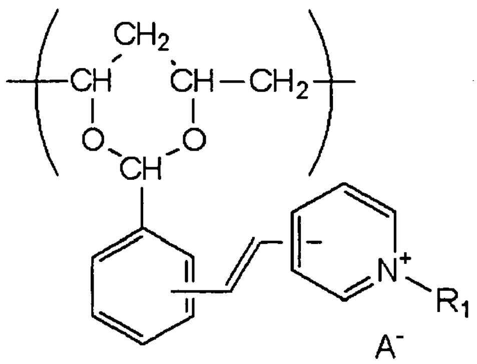

In formula (1), $R_1$ represents an alkyl group having 1 to 4 carbon atoms, and $A^-$ represents a counter anion.

Examples the active ray-crosslinkable polymer compound further include resin compositions having a 2-azido-5-nitrophenylcarbonyloxyethylene structure represented by formula (2) below, or a 4-azido-3-nitrophenylcarbonyloxyethylene structure represented by formula (3) below in a polyvinyl alcohol structure.

Formula (2)

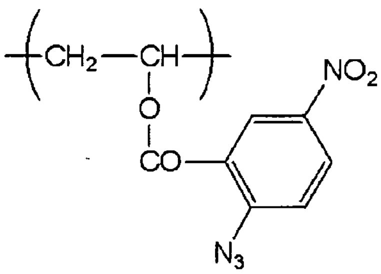

Formula (3)

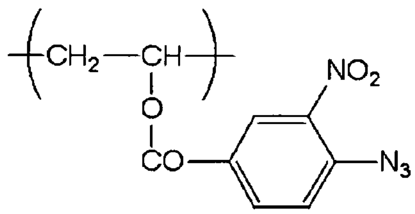

Further, polyvinyl alcohol derivatives having a modifying group including an azide group represented by formula (4) below are also used preferably.

Formula (4)

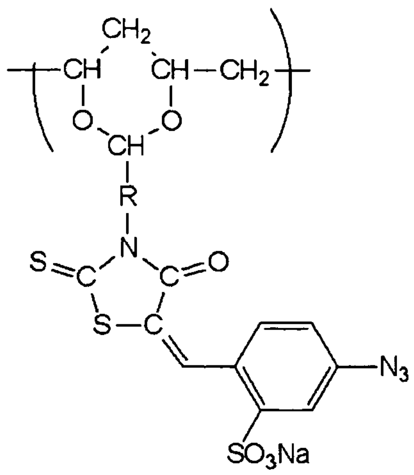

In formula (4), R represents an alkylene group or an arylen group, and R is preferably, a phenylene group.

As polyvinyl alcohol derivatives having a photopolymerization type modifying group, for example, resins represented by formula (5) below can be mentioned from the standpoint of reactivity.

Formula (5)

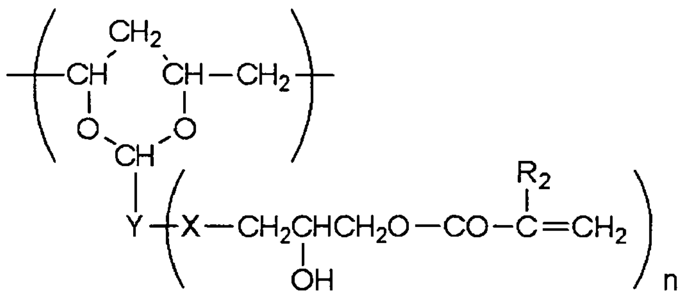

In formula (5), $R_2$ represents a methyl group or a hydrogen atom, n represents 1 or 2, X represents $-(CH_2)_m-COO-$ or -O-, Y represents an aromatic ring or a single bond, and m represents an integer from 0 to 6.

Furthermore, the use of a resin, which is formed by modifying a publicly known water-soluble resin (polymer compound having a hydrophilic main chain) by a photopolymerization type modifying group represented by formula (6) below, is also preferable.

Formula (6)

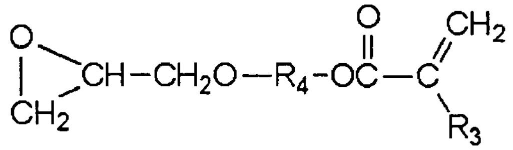

In formula (6), $R_3$ represents a methyl group or a hydrogen atom, and $R_4$ represents a linear or branched alkylene group having 2 to 10 carbon atoms.

Such active ray-crosslinkable polymer compound is preferably incorporated in an amount of from 0.8% by mass to 5.0% by mass relative to the total ink mass. When the active ray-crosslinkable polymer compound exists in an amount of 0.8% by mass or more, the crosslink efficiency may be improved and, by rapid increase in the ink viscosity after the crosslink, beading and color bleed may be in a more preferable state. By regulating the content of the active ray-crosslinkable polymer compound to 5.0% by mass or less, physical properties of the ink and the state in the head may be less affected, which is favorable from the standpoint of ejection properties and storage stability of the ink.

Since the active ray-crosslinkable polymer compound of the invention crosslinks via crosslinking bond between side chains, while the main chain originally has a certain degree of polymerization, it is possible to have a significantly large effect of the increase in molecular weight per photon as compared with active energy ray-curable type resins in which low molecular monomers polymerize via a general chain reaction. Further, publicly known active energy ray-curable type resins have such problem that they are likely to form a hard and fragile film, because controlling the number of crosslinking points is impossible, and so controlling physical properties of the film after the curing is difficult.
On the other hand, in the active ray-crosslinkable polymer compound used in the invention, since the number of the crosslinking points can be controlled to an intended number by the length of the hydrophilic main chain and the introducing amount of the side chain, it is possible to control the cured ink film to have physical properties in accordance with the intended purpose.

Further, in publicly known active ray-curable type inks, since almost all the components other than colorant(s) are curable components, occasionally a dot obtained after curing may be thickened, and thereby the image quality represented by the gloss may be deteriorated. In contrast, the ink for ink-jet recording of the invention requires only a small amount of the active ray-crosslinkable polymer compound and contains a large percentage of dryable components, and, therefore, the image quality after drying may be further improved and fixing property may also be good.

(Photopolymerization initiator, sensitizer)

The ink for ink-jet recording of the invention preferably further includes at least one selected from the group consisting of a photopolymerization initiator and a sensitizer, and more preferably includes a photopolymerization initiator. No particular limitation is imposed on modes of incorporating these compounds, and the photopolymerization initiator and/or the sensitizer may be in a state of dissolved or dispersed in an ink solvent, or chemically bonded to the active ray-crosslinkable polymer compound.

No particular limitation is imposed on photopolymerization initiators and sensitizers applicable to the invention, and publicly known ones may be used. Among these, water-soluble compounds are preferable from the standpoint of mixing capability to the ink and reaction efficiency. Particularly, 4-(2-hydroxyethoxy)phenyl-(2-hydroxy-2-propyl)ketone (HMPK), thioxantone ammonium salt (QTX) and benzophenone ammonium salt (ABQ) are preferable from the standpoint of mixing capability to water-based solvents.

Further, 4-(2-hydroxyethoxy)phenyl-(2-hydroxy-2-propyl)ketone (n=1, HMPK) represented by formula (7) below and the ethyleneoxide adduct thereof (n = 2 to 5) are more preferable from the standpoint of compatibility with the active ray-crosslinkable polymer compound (resin).

Formula (7)

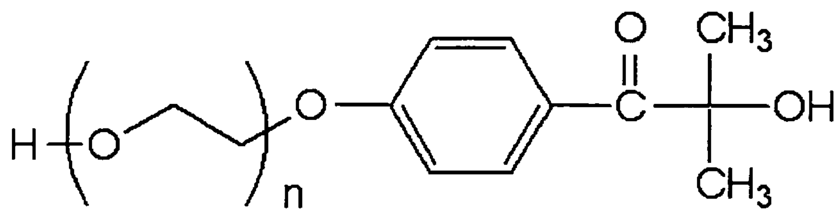

In formula (7), n represents an integer from 1 to 5.

Examples of the photopolymerization initiator that may preferably be used further include benzophenones such as benzophenone, hydroxybenzophenone, bis-N,N-dimethylamino benzophenone, bis-N,N-diethylamino benzophenone, and 4-methoxy-4'-dimethylamino benzophenone; thioxantones such as thioxantone, 2,4-diethylthioxantone, isopropylthioxantone, chlorothioxantone, and isopropoxychlorothioxantone; anthraquinones such as ethylanthraquinone, benzanthraquinone, aminoanthraquinone and chloroanthraquinone; acetophenones; benzoin ethers such as benzoin methyl ether; 2,4,6-trihalomethyltriazines; 1-hydroxycyclohexyl phenyl ketone; 2,4,5-triarylimidazole dimers such as 2-(o-chlorophenyl)-4,5-diphenylimidazole dimer, 2-(o-chlorophenyl)-4,5-bis(m-methoxyphenyl)imidazole dimer, 2-(o-fluorophenyl)-4,5-phenylimidazole dimer, 2-(o-methoxyphenyl)-4,5-phenylimidazole dimer, 2-(p-methoxyphenyl)-4,5-diphenylimidazole dimer, 2-bis(p-methoxyphenyl)-5-phenylimidazole dimmer, and 2-(2,4-dimethoxyphenyl)-4,5-diphenylimidazole dimmer; benzyl methyl ketal, 2-benzyl-2-dimethylamino-1-(4-morpholinophenyl)butane-1-one, 2-methyl-1-[4-(methylthio)phenyl]-2-morpholino-1-propanone, 2-hydroxy-2-methyl-1-phenyl-propane-1-one, 1-[4-(2-hydroxyethoxy)-phenyl]-2-hydroxy-2-methyl-1-propane-1-one, phenanthrenequinone, 9,10-phenanthrenequinone, benzoins such as methylbenzoin and ethylbenzoin; acridine derivatives such as 9-phenylacridine and 1,7-bis(9,9'-acridinyl)heptane; bisacylphosphine oxide and mixtures thereof. These may be used alone or in mixture. In addition, an embodiment, in which any of these photopolymerization initiators is grafted on a side chain of the polymer compound having a hydrophilic main chain, is also preferable.

Together with such photopolymerization initiator, an accelerating agent and the like may also be added. Examples thereof include ethyl p-dimethylaminobenzoate, isoamyl p-dimethylaminobenzoate, ethanolamine, diethanolamine and triethanolamine.

<Water-soluble liquid medium>

As the solvent for the ink for ink-jet recording of the invention, water-soluble liquid media are preferably used. As the water-soluble liquid medium, a mixed solvent of water and a water-soluble organic solvent is more preferably used. Examples of water-soluble organic solvents which may be preferably used include alcohols (such as methanol, ethanol, propanol, isopropanol, butanol, isobutanol, sec-butanol, tert-butanol), polyhydric alcohols (such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol), polyhydric alcohol ethers (such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether), amines (such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine), amides (such as formamide, N,N-dimethylformamide, N,N-dimethylacetamide), heterocycles (such as 2-pyrrolidone, N-methyl-2-pyrrolidone, cyclohexyl pyrrolidone, 2-oxazolidone, 1,3-dimethyl-2-imidazolidinone), and sulfoxides (such as dimethylsulfoxide).

<Surfactant>

The ink for ink-jet recording of the invention preferably contains at least one kind of surfactant.
Examples of surfactants preferably used for the invention include anionic surfactants such as alkylsulfuric acid salts, alkyl ester sulfuric acid salts, dialkylsulfosuccinic acid salts, alkyl naphthalene sulfonates, alkylphosphate, polyoxyalkylene alkylether phosphoric acid salts and fatty acid salts; nonionic surfactants such as polyoxyethylene alkyl ethers, polyoxyalkylene alkyl phenyl ethers, acetylene glycols and polyoxyethylene-polyoxypropylene block copolymers; surfactants such as glycerin ester, sorbitan ester, polyoxyethylenefatty acid amide and amine oxide; and cationic surfactants such as alkylamine salts and quaternary ammonium salts.

These surfactants may be used as a dispersing agent for pigment, and, particularly, anionic and nonionic surfactants can preferably be used.

<Various kinds of additives>

The ink for ink-jet recording of the invention can contain other publicly known additives in addition to the above components, according to need, including, for example, a fluorescent brightening agent, a defoaming agent, a lubricant, a preservative, a thickening agent, an antistatic agent, a matting agent, a water-soluble polyvalent metal salt, a pH-adjusting agent such as acid-base and a buffer solution, an antioxidant, a surface tension-adjusting agent, a specific resistance-adjusting agent, an anticorrosive agent and an inorganic pigment.

<Ink set>

The ink set of the invention include at least one ink for ink-jet recording of the invention. In the ink set of the invention, at least one kind of ink selected from a group consisting of a yellow ink and a black ink is preferably an ink for ink-jet recording of the invention, and more preferably, an yellow ink is an ink for ink-jet recording of the invention.
By using the ink for ink-jet recording of the invention with plural inks in combination, it is possible to obtain excellent curing efficiency of respective inks, and a high curing velocity, and to obtain recorded material that have an excellent hue and high vividness.

<Image-recording method>

In the image-recording method of the invention, the ink for ink-jet recording or the ink set of the invention is used, and the method may include applying the ink onto a recording medium (an ink-applying process), and irradiating active energy rays to the ink applied to the recording medium (a fixing process).
When the ink for ink-jet recording or ink set of the invention is used, it is possible to form an image having high transparency, excellent hue and high vividness.

[Ink-applying process]

No particular limitation is imposed on the ink-applying process in the invention, so long as the ink can be applied on a recording medium by an ink-jet recording system.
Also, no particular limitation is imposed on the ink-jet recording system, and publicly known methods may be applied. For example, a charge control system in which the ink is ejected utilizing electrostatic attraction; a drop on-demand system (pressure pulse system) that utilizes vibrational pressure of a piezoelectric element; an acoustic ink-jet system in which electric signals are converted to acoustic beams and irradiated to the ink so as to make the ink be ejected utilizing radiation pressure; and a thermal ink-jet system in which the ink is heated to form gas bubbles and generated pressure is utilized, may be used.

[Fixing process]

In the fixing process in the invention, an active energy ray (hereinafter, occasionally abbreviated simply to "active ray") is irradiated to an ink applied on a recording medium to crosslink and cure the ink. This can form an image having high transparency.

(Active ray and irradiation method)

As the active ray that may be used in the invention, examples thereof include, an electron beam, ultraviolet ray,$\alpha$ ray,$\beta$ ray,$\gamma$ ray, X ray and fluorescent lamp. Among these, the fluorescent lamp, which has low hazardous nature to human body and is easy to handle, and the electron beam and ultraviolet ray, which are widely utilized industrially, are preferable.
When using an electron beam, the dose of the electron beam to be irradiated is desirably within a range from 0.1 to 30 Mrad. When the dose of the electron beam is less than 0.1 Mrad, irradiation may be insufficient in some cases, and when the amount is more than 30 Mrad, it may degrade a support and the like in some cases, an thus is unpreferable.
When an ultraviolet ray is used, any of publicly known light sources such as low pressure, medium pressure and high pressure mercury lamps having an operation pressure from 0.1 kPa to 1 MPa; a metal halide lamp; a xenon lamp having an emission wavelength in ultraviolet regions; a cold cathode tube, a hot cathode tube and LEDs, may be employed.

(Light irradiation condition after the deposition of an ink)

When active light rays (for example, ultraviolet rays) are used as the active radiation ray in the invention, the irradiation condition of the active light rays in the invention is that, for example, the active light rays are irradiated within a period from 0.001 to 2.0 seconds after the deposition of inks, preferably the active light rays are irradiated within a period from 0.001 to 1.0 second, more preferably from 0.001 to 0.5 seconds. In order to form images having a high resolution, performing the irradiation at a timing as early as possible is particularly important.

(Setting of a lamp)

JP-A No. 60-132767 discloses the basic method for irradiating active light rays. According to this, a light source is provided on both sides of a head unit and the head and light sources scan by a shuttle system. It is so designed that the irradiation is performed at an intended time after the landing of inks. Further, the curing is completed with another light source without driving. USP No. 6,145,979 discloses irradiation methods, in which an optical fiber is used or collimated light is shot to a mirrored surface arranged on the side plane of a head unit to irradiate UV lights to a recorded portion. In the method of forming an image of the invention, any of these irradiation methods may be employed.

One of preferable embodiments is a method, in which the irradiation of active light rays is performed twice at two stages, and, firstly, active light rays are irradiated within a period from 0.001 to 2.0 seconds after the landing of inks by the aforementioned method, and, further, active light rays are irradiated. By performing the irradiation of active light rays at two stages, it becomes possible to further suppress the contraction of a recording medium that occurs upon the curing of inks.

(Recording medium)

No particular limitation is imposed on recording media in the image-recording method of the invention, so long as inks can be applied by an ink-jet system. For example, there can be mentioned paper media such as coated paper and non-coated paper; various kinds of film media; and recording media for ink-jet.

<Image-recording apparatus>

In the image-recording apparatus of the invention, the ink for ink-jet recording or the ink set of the invention is used. This makes it possible to record images having high transparency, excellent hue and high vividness.
The image-recording apparatus of the invention may include an ink-applying unit that applies the ink for ink-jet recording on a recording medium, and an active ray-irradiating unit that irradiate an active ray for crosslinking and curing the ink applied on the recording medium. For the ink-applying unit and the active ray-irradiating unit, publicly known means may be used with no particular limitation. For the ink-applying units and the active ray-irradiating units in the invention, items described in the aforementioned image-recording method can be favorably applied.

For example, as an ink-applying unit, an ink-jet head that utilizes an ejection system, such as a charge control system in which the ink is ejected utilizing electrostatic attraction; a drop on-demand system (pressure pulse system) that utilizes vibrational pressure of a piezoelectric element; an acoustic ink-jet system in which electric signals are converted to acoustic beams and irradiated to the ink to make the ink be ejected utilizing radiation pressure; and a thermal ink-jet system in which the ink is heated to form gas bubbles and generated pressure is utilized, is preferable.
As an active ray-irradiating unit, for example, low pressure, medium pressure and high pressure mercury lamps having an operation pressure from 0.1 kPa to 1 MPa, metal halide lamps, xenon lamps having an emission wavelength in ultraviolet regions, cold cathode tubes, hot cathode tubes and LEDs, are favorable.

<Recorded material>

The recorded material of the invention is a recorded material recorded with the ink for ink-jet recording or the ink set of the invention, and a preferable embodiment is preferably, the recorded material is one recorded by the aforementioned image-recording method on a recording medium. As the recording medium, aforementioned ones may be employed.
The recorded material obtained in this way gives a recorded material on which images having high transparency, excellent hue and high vividness are recorded.

EXAMPLES

Hereinafter, the present invention will be described in more detail on the basis of Examples, but the invention is not limited by these Examples. Meanwhile, "part" and "%" are based on mass unless otherwise specified.

[Measurement of dispersion average particle diameter and ($D_{90}$ - $D_{10}$) of colorant particles]

In the invention, the dispersion average particle diameter of each dispersion composition (the dispersion of colorant particles) according to a dynamic scattering method is expressed as the value of $D_{50}$ ($D_{50}$ represents a particle diameter at which the integrated value in the particle diameter distribution is equal to 0.5 (50 % by number) of the total number of the colorant particles) obtained by the measurement conducted with a particle size analyzer FPAR-1000

(trade name; manufactured by Ohtsuka Electronics Co., Ltd.). Further $D_{90}$ and $D_{10}$ ($D_{90}$ represents a particle diameter at which the integrated value in the particle diameter distribution is equal to 0.5 (50 % by number) of the total number of the colorant particles and $D_{10}$ represents a particle diameter at which the integrated value in the particle diameter distribution is equal to 0.1 (10 % by number) of the total number of the colorant particles) were obtained and thereafter, $\Delta D$ ($D_{90}$ - $D_{10}$) was calculated.

Further, the evaluation of the average primary particle diameter with transmission electron microscope (TEM) observation was performed by dropping the diluted dispersion composition onto a Cu 200 mesh having a carbon film adhered thereto, and then drying the same. And, from an image magnified to 100,000 with a TEM (1200EX, manufactured by JEOL Ltd.), the major axis of 300 particles lying independently without overlap was measured, and then the average value was calculated as an average primary particle diameter (hereinafter, the average primary particle diameter calculated from the TEM observation is referred to as "TEM average particle diameter").

<Synthesis of active ray-crosslinkable polymer compound A>

Into a reaction vessel, 56 g of glycidyl methacrylate, 48 g of p-hydroxybenzaldehyde, 2 g of pyridine, and 1 g of N-nitroso-phenylhydroxyamine ammonium salt were put, which was stirred in a hot-water bath at 80°C for 8 hours.

Next, 45 g of polyvinyl acetate-saponified material (PVA) having a polymerization degree of 300 and saponification degree of 88% were dispersed in 225 g of ion-exchanged water, and, then, to the liquid, 4.5 g of phosphoric acid and p-(3-methacryloxy-2-hydroxypropyloxy)benzaldehyde obtained from the above-described reaction were added so as to give the modification percentage of 3% by mole relative to the PVA, which was then stirred at 90°C for 6 hours. The obtained solution was cooled to room temperature, to which, then, 30 g of a basic ion-exchange resin was added and stirred for one hour. After that, the ion-exchange resin was filtrated, to which IRGACURE 2959 (manufactured by Ciba Specialty Chemicals) was added as a photopolymerization initiator at such a ratio as 0.1 g relative to 100 g of a 15% aqueous solution. Then, the solution was diluted with ion-exchanged water to give a 10% polymer compound A (active ray-crosslinkable polymer compound) aqueous solution.

<Synthesis example of polymer (polymer dispersing agent)>

(Polymer synthesis example 1)

A 2000 ml separable flask provided with a stirring device, reflux tube, thermometer and dropping funnel, was subjected to nitrogen-substituting. 200.0 parts of diethylene glycol monomethyl ether were put in the separable flask, the temperature of which was raised to 80°C with stirring. Then, 200.0 parts of diethylene glycol monomethyl ether, 483.0 parts of benzyl acrylate, 77.5 parts of acrylic acid and 4.8 parts of t-butylperoxy(2-ethylhexanoate) were put in the dropping funnel, and were dropped in the separable flask at 80°C over 4 hours to react. After the completion of the dropping, it was held at 80°C for one hour, and thereto, 0.8 parts oft-butylperoxy(2-ethylhexanoate) were added. The mixture was allowed to react at 80°C for additional one hour. Subsequently, diethylene glycol monomethyl ether was removed by reduced-pressure distillation. Then, 600.0 parts of methyl ethyl ketone were added to give a polymer composition solution having a resin solid content of 50%. A part of the polymer composition solution thus obtained was collected and dried with an ignition dryer at 105°C for one hour. The obtained solid matter of the polymer composition had an acid value of 65 mg KOH/g, and a weight-average molecular weight of 34000.

(Polymer synthesis example 2)

A polymer was synthesized in the same way as in Polymer synthesis example 1, except for using acrylic acid in 100.8 parts instead of 50.4 parts. A part of the polymer composition solution was collected and dried with a dryer at 105°C for one hour. The obtained solid matter of the polymer composition had an acid value of 130 mg KOH/g, and a weight-average molecular weight of 29000.

[Preparation of pigment dispersion liquid]

(Production of yellow colorant dispersion composition A)

As a dispersing agent, 10 parts of dried product of the polymer composition (polymer dispersing agent) produced in Polymer synthesis example 1 were dissolved in 80 parts of dimethylsulfoxide, to which 10 parts of C.I. PY128 were suspended in a flask under an air circumstance at 25°C. Next, a 25% tetramethylammonium hydroxide methanol solution (manufactured by Wako Pure Chemical Industries) was dropped in small amounts to dissolve the pigment, to give a red solution. The pigment solution was stirred for three hours, and then quickly put into cooled and thermally insulated ion-exchanged water (ion-exchanged water 400 parts relative to the pigment 10 parts: 0°C) stirred with impeller system stirring blades (800 rpm), using two SYSTEM DISPENSER (manufactured by MUSASHI ENGINEERING, needle inner diameter: 0.58 mm, discharge pressure: 4.0 kgf/$cm^2$) to give an aqueous pigment dispersion composition of pigment-containing particles (colorant particle) having a dispersion average particle diameter of 39.8 nm.

Next, to the aqueous pigment dispersion composition, a 5% sulfuric acid aqueous solution was dropped to adjust pH to 4.0 to aggregate the pigment-containing particle (colorant particle) from the pigment dispersion composition. After that, the aggregate was vacuum-filtrated using a membrane filter (retention particle diameter: 0.45 μm), and washed with 500 ml of ion-exchanged water three times to give a paste of the aqueous dispersion composition of pigment-containing particles (colorant particle), from which salts and solvent had been removed.

Next, after adding 2.0 g of potassium hydroxide to the paste, ion-exchanged water was added so as to give the total mass of 100 g, which was then stirred for one hour. After that, potassium hydroxide was added to adjust a pH to 9.5, to give a yellow colorant dispersion composition A having a pigment concentration of 10%. The yellow colorant dispersion composition A thus obtained was diluted with ultrapure water so as to give a pigment concentration of 0.1%. Thereon a dynamic light scattering method and a TEM observation were performed. A dispersion average particle diameter obtained by the dynamic light scattering method was 43.2 nm and a TEM average particle diameter was 33.6 nm. The liquid exhibited high transparency. The calculated $D_{90}$ - $D_{10}$ was 38.2 nm.

(Production of yellow colorant dispersion composition B)

To 120.0 parts of the polymer composition (polymer dispersing agent) solution produced in Polymer synthesis example 2, 3.0 parts of a 30% sodium hydroxide aqueous solution were added and the mixture was stirred with a high-speed disperser for five minutes, and, additionally, 480.0 parts of yellow pigment C.I. PY74 were added, which was dispersion-treated using PICOMILL (trade name; manufactured by Asada Iron Works Co., Ltd.; dispersion media: zirconia, temperature: 20°C, dispersion media/dispersion liquid weight ratio: 8/2) at a peripheral velocity of 8 m/sec for 13.5 hours, to give a pigment dispersion slurry. Then, the pigment dispersion slurry was dispersed with an ultra-high pressure homogenizer (MICROFLUIDIZER, manufactured by MIZUHO Industrial Co., Ltd.) by ten-time continuation at a pressure of 200 MPa, to give a pigment dispersion liquid.

Further, from the pigment dispersion liquid thus obtained, methyl ethyl ketone and a part of water were distilled by vacuum distillation using an evaporator, which was centrifuged at 5000 rpm for 30 minutes with a centrifugal machine (05P-21, Hitachi), to which ion-exchanged water was added so as to give a pigment concentration of 10%, thereby obtaining a yellow colorant dispersion composition B. Then, it was pressure-filtrated using a 2.5 μm membrane filter (manufactured by Advantech).

The yellow colorant dispersion composition B thus obtained was diluted with ultrapure water. Thereon a dynamic light scattering method and a TEM observation were performed. A dispersion average particle diameter obtained by the dynamic light scattering method was 68.4 nm and a TEM average particle diameter was 44.1 nm. The calculated $D_{90}$ - $D_{10}$ was 105.3 nm.

(Production of magenta pigment dispersion composition A)

As a dispersing agent, 10 parts of a dried product of the polymer composition solution produced in Polymer synthesis example 2 were dissolved in 80 parts of dimethylsulfoxide, to which 10 parts of quinacridone pigment, C.I. PR122 were suspended in a flask under an air circumstance at 25°C. Next, a 25% tetramethylammonium hydroxide methanol solution (manufactured by Wako Pure Chemical Industries) was dropped in small amounts to dissolve the quinacridone pigment to give a deep blue-violet solution. The pigment solution was stirred for three hours, which was then quickly put into cooled and thermally insulated ion-exchanged water (ion-exchanged water 400 parts relative to pigment 10 parts: 5°C) stirred with impeller system stirring blades (800 rpm), using two system dispensers (manufactured by MUSASHI ENGINEERING, needle inner diameter: 0.58 mm, discharge pressure: 4.0 kgf/$cm^2$) to give a transparent and reddish aqueous pigment dispersion composition of pigment-containing particles (colorant particle). A dynamic light scattering method and a TEM observation were performed on the thus obtained aqueous pigment dispersion. A dispersion average particle diameter obtained by the dynamic light scattering method was 24.2 nm, and a TEM average particle diameter was 19.9 nm.

Next, to the aqueous pigment dispersion composition, hydrochloric acid was dropped to adjust a pH to 3.5, to aggregate pigment-containing particles from the pigment dispersion composition. Then, the aggregate was vacuum filtrated with a membrane filter having an average pore diameter of 0.2 μm, which was washed twice with ion-exchanged water to give a paste of the dispersion composition of pigment-containing particles, from which salts and solvent had been removed.

Next, to this paste, 100 parts of acetone were added, which was subjected to stirring and ultrasonic treatment. After that, the product was vacuum filtrated using a membrane filter having an average pore diameter of 0.2 μm to give

a paste of the dispersion composition containing pigment-containing particles. The paste was washed with ion-exchanged water, vacuum filtrated again using a membrane filter having an average pore diameter of 0.2 μm to give a paste of the dispersion composition containing pigment-containing particles.

Next, to the paste, a small amount of ion-exchanged water was added and, further, a 15% tetramethylammonium hydroxide aqueous solution (manufactured by Wako Pure Chemical Industries) was added, and then ion-exchanged water was added, which was stirred for one hour. After that, ion-exchanged water was added so as to give a pigment concentration of 10%. Furthermore, a 15% tetramethylammonium hydroxide aqueous solution was added to adjust a pH to 9.5, to give a magenta pigment dispersion composition A.

The magenta pigment dispersion composition A thus obtained was diluted with ultrapure water so as to give a pigment concentration of 0.1%. Thereon a dynamic light scattering method and a TEM observation were performed. A dispersion average particle diameter obtained by the dynamic light scattering method was 25.0 nm and a TEM average particle diameter was 20.4 nm. Calculated $D_{90}$ - $D_{10}$ was 34.6 nm.

The magenta pigment dispersion composition A showed no change of the particle diameter after two-week storage, no precipitate or no discoloration.

(Production of magenta pigment dispersion composition B)

In the same way as in the production of the magenta pigment dispersion composition A, as a dispersing agent, 10 parts of the dried product of polymer composition solution produced in Polymer synthesis example 2 were dissolved in 80 parts of dimethylsulfoxide, in which 10 parts of quinacridone pigment, C.I. PR122 were suspended in a flask under an air circumstance at 25°C. Next, a 25% tetramethylammonium hydroxide methanol solution (manufactured by Wako Pure Chemical Industries) was dropped in a small amounts to dissolve the quinacridone pigment, to give deep blue-violet solution. The pigment solution was stirred for three hours, which was then quickly put into cooled and thermally insulated ion-exchanged water (ion-exchanged water 400 parts relative to pigment 10 parts: 5°C) stirred by impeller system stirring blades using two system dispensers (manufactured by Musashi Engineering, needle inner diameter: 0.58 mm, discharge pressure: 4.0 kgf/$cm^2$), to give a transparent and reddish pigment dispersion composition.

A dynamic light scattering method and a TEM observation were performed on the thus obtained pigment dispersion composition. A dispersion average particle diameter obtained by the dynamic light scattering method was 33.8 nm, and a TEM average particle diameter was 25.1 nm.

Next, to the pigment dispersion composition, hydrochloric acid was dropped to adjust a pH to 3.5, to aggregate pigment particles from the pigment dispersion composition. After that, the aggregate was vacuum filtrated using a membrane filter having an average pore diameter of 0.2 μm, which was washed twice with ion-exchanged water to give a paste of the dispersion composition of pigment particles, from which salts and solvent had been removed.

Then, to the paste, a small amount of ion-exchanged water was added, and further a 15% tetramethylammonium hydroxide aqueous solution (manufactured by Wako Pure Chemical Industries) was added, and then ion-exchanged water was added, which was stirred for one hour. After that, ion-exchanged water was added so as to give a pigment concentration of 10%. Further, a 15% tetramethylammonium hydroxide aqueous solution was added to adjust a pH to 9.5 to give a magenta pigment dispersion composition B.

The magenta pigment dispersion composition B thus obtained was diluted with ultrapure water so as to give a pigment concentration of 0.1%. Thereon a dynamic light scattering method and a TEM observation were performed. A dispersion average particle diameter obtained by the dynamic light scattering method was 34.5 nm, and a TEM average particle diameter was 26.4 nm. Calculated $D_{90}$ - $D_{10}$ was 40.8 nm.

Meanwhile, the magenta pigment dispersion composition B showed no change of the particle diameter after two-week storage, no precipitate or no discoloration.

(Production of magenta pigment dispersion composition C)

A magenta pigment dispersion composition C was obtained in the same way as in the production of the magenta pigment dispersion composition A, except for replacing 10 parts of quinacridone pigment, C.I. PR122 with 5.2 parts of quinacridone pigment, C.I. PR122 and 4.8 parts of quinacridone pigment, C.I. PV19, and changing the needle inner diameter of the system dispenser to 0.8 mm.

The magenta pigment dispersion composition C thus obtained was diluted with ultrapure water so as to give a pigment concentration of 0.1%. A dispersion average particle diameter obtained by the dynamic light scattering method was 39.3 nm, and a TEM average particle diameter was 31.1 nm. Calculated $D_{90}$ - $D_{10}$ was 45.8 nm.

Meanwhile, the magenta pigment dispersion composition C showed no change of the particle diameter after two-week storage, no precipitate or no discoloration.

(Production of magenta pigment dispersion composition D)

A pigment dispersion liquid was obtained in the same way as in the production of the yellow colorant dispersion composition B, except for replacing 480.0 parts of the yellow pigment, C.I. PY74 with 480.0 parts of magenta pigment, C.I. PR122. The pigment dispersion liquid was centrifuged with a centrifugal separator at 18000 rpm for 30 minutes, and the obtained supernatant was concentrated and adjusted so as to give a pigment concentration of 10% using an evaporator to give a magenta pigment dispersion composition D.
The magenta pigment dispersion composition D thus obtained was diluted with ultrapure water so as to give a pigment concentration of 0.1%. Thereon a dynamic light scattering method and a TEM observation were performed. A dispersion average particle diameter obtained by the dynamic light scattering method was 43.2 nm and a TEM average particle diameter was 33.3 nm. Calculated $D_{90}$ - $D_{10}$ was 72.7 nm.

(Production of magenta pigment dispersion composition E)

A magenta pigment dispersion composition E was obtained in the same way as in the production of the yellow colorant dispersion composition B, except for replacing 480.0 parts of the yellow pigment, C.I. PY74 with 480.0 parts of magenta pigment, C.I. PR122.
The magenta pigment dispersion composition E thus obtained was diluted with ultrapure water. Thereon a dynamic light scattering method and a TEM observation were performed. An average volume particle diameter obtained by the dynamic light scattering method was 68.4 nm and a TEM average particle diameter was 40.5 nm. Calculated $D_{90}$ - $D_{10}$ was 112.8 nm.

(Production of magenta pigment dispersion composition F)

A pigment dispersion liquid was obtained in the same way as in the production of the yellow colorant dispersion composition B, except for replacing 480.0 parts of the yellow pigment, C.I. PY74 with 480.0 parts of magenta pigment, C.I. PR122. A supernatant obtained by centrifuging the pigment dispersion liquid with a centrifugal separator at 15000 rpm for 30 minutes was concentrated and adjusted so as to give a pigment concentration of 10% using an evaporator to give a magenta pigment dispersion composition F.
The magenta pigment dispersion composition F thus obtained was diluted with ultrapure water so as to give a pigment concentration of 0.1%. Thereon a light scattering method and a TEM observation were performed. A dispersion average particle diameter obtained by the dynamic light scattering method was 48.5 nm and a TEM average particle diameter was 34.5 nm. Calculated $D_{90}$ - $D_{10}$ was 102.9 nm.

(Production of magenta pigment dispersion composition G)

A magenta pigment dispersion composition G was obtained in the same was as in the production of the yellow colorant dispersion composition B, except for replacing 480.0 parts of the yellow pigment, C.I. PY74 with 480.0 parts of magenta pigment, C.I. PR122, and changing dispersion treatment conditions of the ultra-high pressure homogenizer (NUCROFLUIDIZER, manufactured by MIZUHO Industrial) to fifteen-time continuation at a pressure of 200 MPa. The magenta pigment dispersion composition G thus obtained was diluted with ultrapure water. Thereon a dynamic light scattering method and a TEM observation were performed. A dispersion average particle diameter obtained by the dynamic light scattering method was 60.4 nm, and a TEM average particle diameter was 40.1 nm. Calculated $D_{90}$ - $D_{10}$ was 62.9 nm.

(Production of cyan pigment dispersion composition A)

To 50 parts of methanesulfonic acid, 3 parts of C.I. PB15:3 and 6 parts of polyvinyl pyrrolidone K25 (trade name) (manufactured by Tokyo Chemical Industry) were added at room temperature and stirred for 2 hours, to which formic acid was dropped in a small amounts to dissolve the pigment and give a pigment solution.
The pigment solution was subjected to ultrasonic treatment, which was quickly put into 1000 parts of cooled and thermally insulated ion-exchanged water in which 0.6 parts of sodium oleate was dissolved, stirred with an impeller system stirring blades (800 rpm), using a system dispenser (manufactured by Musashi Engineering, needle inner diameter: 0.80 mm, discharge pressure: 4.0 kgf/$cm^2$), to give a transparent and bluish pigment dispersion liquid.
After that, it was purified by eliminating the filtrate while maintaining the volume to a constant value by adding distilled water with an ultrafiltration apparatus (UHP-62K, manufactured by Advantech Toyo, cut-off molecular weight: 50,000), and then was concentrated to pigment 10% to give a cyan pigment dispersion composition A.
The cyan pigment dispersion composition A thus obtained was diluted with ultrapure water so as to give a pigment

concentration of 0.1%. Thereon a dynamic light scattering method and a TEM observation were performed. A dispersion average particle diameter obtained by the dynamic light scattering method was 20.8 nm, and a TEM average particle diameter was 17.1 nm. Calculated $D_{90}$ - $D_{10}$ was 32.1 nm.
Meanwhile, the cyan pigment dispersion composition A showed no change of particle diameter after two-week storage, no precipitation or no discoloration.

(Production of cyan pigment dispersion composition B)

A cyan pigment dispersion composition B was obtained in the same way as in the production of the yellow colorant dispersion composition B, except for replacing 480.0 parts of the yellow pigment, C.I. PY74 with 480 parts of cyan pigment, C.I. PB 15:3.
The cyan pigment dispersion composition B thus obtained was diluted with ultrapure water. Thereon a dynamic light scattering method and a TEM observation were performed. A dispersion average particle diameter obtained by the dynamic light scattering method was 70.6 nm, and a TEM average particle diameter was 40.8 nm. Calculated $D_{90}$ - $D_{10}$ was 107.3 nm.

[Evaluation of light absorption spectrum]

Each of the obtained magenta pigment dispersion composition A and magenta pigment dispersion composition E was diluted with ultrapure water, and then a light absorption spectrum in visible regions was measured using a cell having a light path length of 1 cm. Fig. 1 shows respective light absorption spectra obtained, wherein they are normalized in the wavelength region from 350 nm to 750 nm while defining the maximum value in the region as 1.
As shown in Fig. 1, the magenta pigment dispersion composition A has a very small absorption in a short wavelength region as compared with the magenta pigment dispersion composition E. That is, it is presumed that the small light absorption in short wavelength region allows active light rays to pass through efficiently.

[Production of ink for ink-jet recording]

Using respective pigment dispersion compositions produced as described above, respective components shown in Table 1 were mixed to produce respective inks for ink-jet recording having a composition (%) shown in Table 1. Next, a dispersion average particle diameter of respective inks for ink-jet recording was measured in the same way as in the aforementioned pigment dispersion compositions, and $D_{90}$ - $D_{10}$ was calculated. The results are shown in Table 1. In Table 1, "polymer compound A aqueous solution" means a 10% aqueous solution of polymer compound A (active ray-crosslinkable polymer compound) obtained in "Synthesis of active ray-crosslinkable polymer compound A", "DEG" means diethylene glycol, "DEG mBE" means diethylene glycol monobutyl ether, and "OLFINE E1010" is a surfactant manufactured by Nissin Chemical Industry.
Table 1

| Ink | Pigment dispersion liquid | | Polymer compound A Aqueous solution | Glycerin | DEG | DEG mBE | OLFINE E1010 | Ion-exchanged water | Dispersion average particle diameter (nm) | $D_{90}$ - $D_{10}$ |
|---|---|---|---|---|---|---|---|---|---|---|
| Yellow ink A | Yellow pigment dispersion liquid A | 30 | 30 | 7 | 15 | 2 | 0.2 | Residual | 44.1 | 35.0 |
| Yellow ink B | Yellow pigment dispersion liquid B | 30 | 30 | 7 | 15 | 2 | 0.2 | Residual | 66.3 | 104.3 |
| Magenta ink A | Magenta pigment dispersion liquid A | 40 | 30 | 7 | 15 | 2 | 0.2 | Residual | 26.2 | 36.1 |
| Magenta ink B | Magenta pigment dispersion liquid B | 40 | 30 | 7 | 15 | 2 | 0.2 | Residual | 36.1 | 40.9 |
| Magenta ink C | Magenta pigment dispersion liquid C | 40 | 30 | 7 | 15 | 2 | 0.2 | Residual | 39.8 | 46.5 |
| Magenta ink D | Magenta pigment dispersion liquid D | 40 | 30 | 7 | 15 | 2 | 0.2 | Residual | 43.7 | 75.2 |
| Magenta ink E | Magenta pigment dispersion liquid E | 40 | 30 | 7 | 15 | 2 | 0.2 | Residual | 64.9 | 109.9 |
| Magenta ink F | Magenta pigment dispersion liquid F | 40 | 30 | 7 | 15 | 2 | 0.2 | Residual | 47.9 | 103.1 |

(continued)

| Ink | Pigment dispersion liquid | | Polymer compound A Aqueous solution | Glycerin | DEG | DEG mBE | OLFINE E1010 | Ion-exchanged water | Dispersion average particle diameter (nm) | $D_{90}$ - $D_{10}$ |
|---|---|---|---|---|---|---|---|---|---|---|
| Magenta ink G | Magenta pigment dispersion liquid G | 40 | 30 | 7 | 15 | 2 | 0.2 | Residual | 60.9 | 64.1 |
| Cyan ink A | Cyan pigment dispersion liquid A | 40 | 30 | 7 | 15 | 2 | 0.2 | Residual | 22.0 | 37.5 |
| Cyan ink B | Cyan pigment dispersion liquid B | 40 | 30 | 7 | 15 | 2 | 0.2 | Residual | 69.5 | 45.8 |

[Evaluation of ink]

With an ink-jet printer having a piezo head, printing was performed to a base material (recording medium) described below.
As a means for irradiating ultraviolet rays, Vzero manufacture by Integration was used, wherein the output voltage was appropriately adjusted so as to give a luminous intensity of 50 $mW/cm^2$ and time from the deposition of the ink onto the base material to the irradiation of ultraviolet rays was controlled so as to be less than 0.8 seconds.
To a record head, a piezo type ink jet nozzle, which had 128 nozzles for respective colors with nozzle pitches of 360 dpi and was capable of ejecting ink droplets having variable sizes within a range from 4 to 24 pl, was mounted. Meanwhile, "dpi" in the invention means the number of dots per 2.54 cm.

(Image printing)

Using the ink-jet recording apparatus, a solid image was output under conditions of 720 dpi x 720 dpi, the maximum ink droplet amount per pixel of 12 pl and the maximum ink-adhering amount of 8.9 $g/m^2$ with 100% output density with four paths, then ultraviolet rays were irradiated under the aforementioned condition to form an image. Meanwhile, as a base material, art paper (NK art KINFUJI N, manufactured by Oji Paper) was used. The wind velocity of ambient air over the base material surface was controlled so as to be less than 1 m/second.

(Evaluation of image by finger touch)

The cured state of the image thus obtained was evaluated by finger touch according to the evaluation criteria described below.

- Evaluation criteria -

4: No image deformation was observed after touching a finger, very good.
3: Upon touching a finger, tackiness was observed, but no image deformation was found.
2: Upon touching a finger, tackiness was observed, and image deformation was also found.
1: Upon touching a finger, image deformation was found.

Table 2 shows evaluation results.

(Evaluation of ejection stability)

After continuously ejecting respective inks for five hours using the above-described ink-jet recording apparatus, a solid image was output with 100% output density to art paper (NK art KINFUJI N, manufactured by Oji Paper). The number of white stripes generating in the obtained solid image was measured to evaluate the ejection stability according to the criteria described below.

- Evaluation criteria -

3: Any white stripe, which is an unprinted portion, does not generate in the whole printed area.
2: Generation of slight white stripe is found, but is within a practically tolerable range.
1: Lots of white stripes generate over the whole printed area to result in practically unusable quality.

Table 2 shows evaluation results.
Table 2

| | Kind of ink | Evaluation of image by finger touch | Evaluation of ejection stability |
|---|---|---|---|
| Example 1 | Yellow ink A | 4 | 3 |

(continued)

| | Kind of ink | Evaluation of image by finger touch | Evaluation of ejection stability |
|---|---|---|---|
| Example 2 | Magenta ink A | 4 | 3 |
| Example 3 | Magenta ink B | 4 | 3 |
| Example 4 | Magenta ink C | 4 | 3 |
| Example 5 | Magenta ink D | 3 | 2 |
| Example 6 | Cyan ink A | 4 | 3 |
| Comparative Example 1 | Yellow ink B | 1 | 1 |
| Comparative Example 2 | Magenta ink E | 1 | 1 |
| Comparative Example 3 | Cyan ink B | 1 | 1 |
| Comparative Example 4 | Magenta ink F | 2 | 1 |
| Comparative Example 5 | Magenta ink G | 2 | 1 |

As understood from Table 2, inks in Examples 1 to 6 cured quickly to give good results. On the other hand, inks in Comparative Examples 1 to 3 cured insufficiently. For inks in Comparative Examples in 4 and 5, in the finger touch test of an image, tackiness was observed.

(Evaluation of overprinted image)

Using the aforementioned ink-jet recording apparatus, the yellow ink B was applied so as to form a solid image, on which each of inks shown in Table 3 was ejected so as to form a solid image. Then, ultraviolet rays were irradiated to record an image. Meanwhile, output voltage was appropriately controlled so as to give ultraviolet ray irradiation luminous intensity of 70 $mW/cm^2$.

(Evaluation of transparency)

The image thus obtained was visually observed and evaluated according to the evaluation criteria described below.

- Evaluation criteria -

3: The underlying yellow color were formed well, to give an image with highly dense and vivid secondary color.

2: The underlying yellow color seemed to be pale, and insufficient secondary color was formed.

1: The underlying yellow was pale

Table 3 shows evaluation results.

(Evaluation of image by finger touch)

The cured state of the image thus obtained was evaluated by the finger touch according to the evaluation criteria described below.

- Evaluation criteria -

4: No deformation of the image was found after the finger touch, very good.

3: Tackiness was observed after the finger touch, but no deformation of the image was found.

2: Tackiness was observed after the finger touch, and deformation of the image was also found.

1: Deformation of the image was found after the finger touch.

Table 3 shows evaluation results.

Table 3

| | Kind of ink | Evaluation of image by finger touch | Evaluation of transparency |
|---|---|---|---|
| Example 7 | Magenta ink A | 4 | 3 |
| Example 8 | Magenta ink B | 4 | 3 |
| Example 9 | Magenta ink C | 4 | 3 |
| Example 10 | Magenta ink D | 3 | 3 |
| Example 11 | Cyan ink A | 4 | 3 |
| Comparative Example 6 | Magenta ink E | 1 | 1 |
| Comparative Example 7 | Cyan ink B | 1 | 1 |
| Comparative Example 8 | Magenta ink F | 2 | 2 |
| Comparative Example 9 | Magenta ink G | 2 | 2 |

As can be seen from Table 3, regarding Examples 7 to 11, such good results were obtained that the underlying yellow ink had also been cured sufficiently with an excellent curing efficiency. In addition, regarding Examples 7 to 11, good secondary color excellent also in transparency was obtained.

From the results, it is presumed that the case where the ink of the invention is used as an ink set can also give images with excellent curing property of the whole image and vividness.

(X-ray diffraction measurement)

For the X-ray diffraction measurement described below, RINT2500 manufactured by Rigaku Corporation was used, and the Cu-K$\alpha$1 ray from a cupper target was used.

The magenta pigment dispersion compositions A and B produced as described above were dried using an evaporator, so as to obtain powder, which was subjected to an X-ray diffraction measurement performed with RINT2500 manufactured by Rigaku Corporation. From the obtained spectra, respective crystallite diameters were calculated to give, for the magenta pigment dispersion liquid A, 17.8 $\pm$ 2 nm (178 $\pm$ 20 Angstroms) as the crystallite diameter of pigment particles contained in the dispersion liquid, and, in the spectrum of the magenta pigment dispersion liquid B, halo was observed at 2$\theta$ = 4 deg to 70 deg. In the same way, the X-ray diffraction measurement was also performed for the yellow pigment dispersion composition A, magenta pigment dispersion compositions C and D, and the cyan pigment dispersion liquid A to give such crystallite diameters as 24.8 $\pm$ 2 nm (248 $\pm$ 20 Å), 20.2 $\pm$ 2 nm (202 $\pm$ 20 Å), 25.6 $\pm$ 2 nm (256 $\pm$ 20 Å), 15.3 $\pm$ 2 nm (153 $\pm$ 20 Å) and 13.8 $\pm$ 2 nm (138 $\pm$ 20 Å) for respective dispersion compositions. From the result, it is presumed that pigment fine particles contained in the yellow ink A, magenta inks A, C and D, and cyan ink A have a crystalline structure.

[Other evaluation]

Each of recorded materials obtained in Examples was set on a fade meter, to which a xenon lamp was irradiated at a luminous intensity of 170,000 lux for four days to test the light resistance. For a recorded material recorded using the magenta ink B, slight change in the hue including magenta was sensed visually as compared with recorded materials in other Examples, and, for layered images, the underlying yellowish color was good.

According to the invention, it is possible to provide an ink for ink-jet recording which can be cured at a good curing velocity by application of active energy ray and is also capable of forming images having high transparency, an ink set including the ink, an image-recording method using the ink, and an image-recording apparatus, and a recorded material recorded with the ink and having high transparency.

Hereinafter, exemplary embodiments of the invention are described, but the invention is not limited to these.

<1> An ink for ink-jet recording, comprising:

colorant particles containing a colorant and a dispersing agent; and
a polymer compound capable of forming a crosslinking bond by application of an active energy ray,
wherein the dispersion average particle diameter of the colorant particles is from 1 nm to 50 nm, and a value represented by a formula ($D_{90}$ - $D_{10}$) is 100 nm or less, wherein $D_{90}$ and $D_{10}$ represent, respectively, a particle diameter at which an integrated value of a particle diameter distribution function of the colorant particles which is represented by a formula dG = F(D)dD is 0.9 of the total number of colorant particles (90% by number), and 0.1 of the total number of colorant particles (10% by number), wherein G represents the number of particles, and D represents a particle diameter.

<2> The ink for ink-jet recording according to <1>, wherein the colorant particles have a crystalline structure.
<3> The ink for ink-jet recording according to <1> or <2>, wherein the dispersing agent is a polymer compound.
<4> The ink for ink-jet recording according to any one of <1> to <3>, wherein the polymer compound capable of forming a crosslinking bond by application of an active energy ray comprises a hydrophilic main chain and a plurality of side chains, and is capable of forming a crosslinking bond between side chains of different molecules of the polymer compound.
<5> The ink for ink-jet recording according to any one of <1> to <4> further comprising a photopolymerization initiator.
<6> The ink for ink-jet recording according to any one of <1> to <5>, wherein the colorant particles have hue of yellow or black.
<7> An ink set comprising the ink for ink-jet recording according to any one of <1> to <6>.
<8> An image-recording method comprising ejecting the ink for ink-jet recording according to any one of <1> to <6> by an ink-jet method to record an image.
<9> An image-recording method comprising ejecting the ink for ink-jet recording of the ink-set according to claim <7>, by an ink-jet method to record an image.
<10> An image-recording apparatus comprising an ejecting unit that ejects the ink for ink-jet recording according to any one of <1> to <6> by an ink-jet method.
<11> An image-recording apparatus comprising an ejecting unit that ejects the ink for ink-jet recording of the ink set according to <7>, by an ink-jet method.
<12> A recorded material, recorded with the ink for ink-jet recording according any one of <1> to <6>.
<13> A recorded material, recorded with the ink set according to <7>.

All publications, patent applications, and technical standards mentioned in this specification are herein incorporated by reference to the same extent as if each individual publication, patent application, or technical standard was specifically and individually indicated to be incorporated by reference.

## Claims

**1.** An ink for ink-jet recording, comprising:

colorant particles containing a colorant and a dispersing agent; and
a polymer compound capable of forming a crosslinking bond by application of an active energy ray,
wherein the dispersion average particle diameter of the colorant particles is from 1 nm to 50 nm, and a value represented by a formula ($D_{90}$ - $D_{10}$) is 100 nm or less, wherein $D_{90}$ and $D_{10}$ represent, respectively, a particle diameter at which an integrated value of a particle diameter distribution function of the colorant particles which is represented by a formula dG = F(D)dD is 0.9 of the total number of colorant particles (90% by number), and 0.1 of the total number of colorant particles (10% by number), wherein G represents the number of particles, and D represents a particle diameter.

**2.** The ink for ink-jet recording according to claim 1, wherein the colorant particles have a crystalline structure.

**3.** The ink for ink-jet recording according to claim 1 or 2, wherein the dispersing agent is a polymer compound.

**4.** The ink for ink-jet recording according to any one of claims 1 to 3, wherein the polymer compound capable of forming a crosslinking bond by application of an active energy ray comprises a hydrophilic main chain and a plurality of side

chains, and is capable of forming a crosslinking bond between side chains of different molecules of the polymer compound.

**5.** The ink for ink-jet recording according to any one of claims 1 to 4, further comprising a photopolymerization initiator.

**6.** The ink for ink-jet recording according to any one of claims 1 to 5, wherein the colorant particles have hue of yellow or black.

**7.** An ink set comprising the ink for ink-jet recording according to any one of claims 1 to 6.

**8.** An image-recording method comprising ejecting the ink for ink-jet recording according to any one of claims 1 to 6 or the ink for ink-jet recording of the ink set according to claim 7 by an ink-jet method to record an image.

**9.** An image-recording apparatus comprising an ejecting unit that ejects the ink for ink-jet recording according to any one of claims 1 to 6 or the ink for ink jet-recording of the ink set according to claim 7, by an ink-jet method.

**10.** A recorded material, recorded with the ink for ink-jet recording according to any one of claims 1 to 6 or with the ink set according to claim 7.

FIG. 1

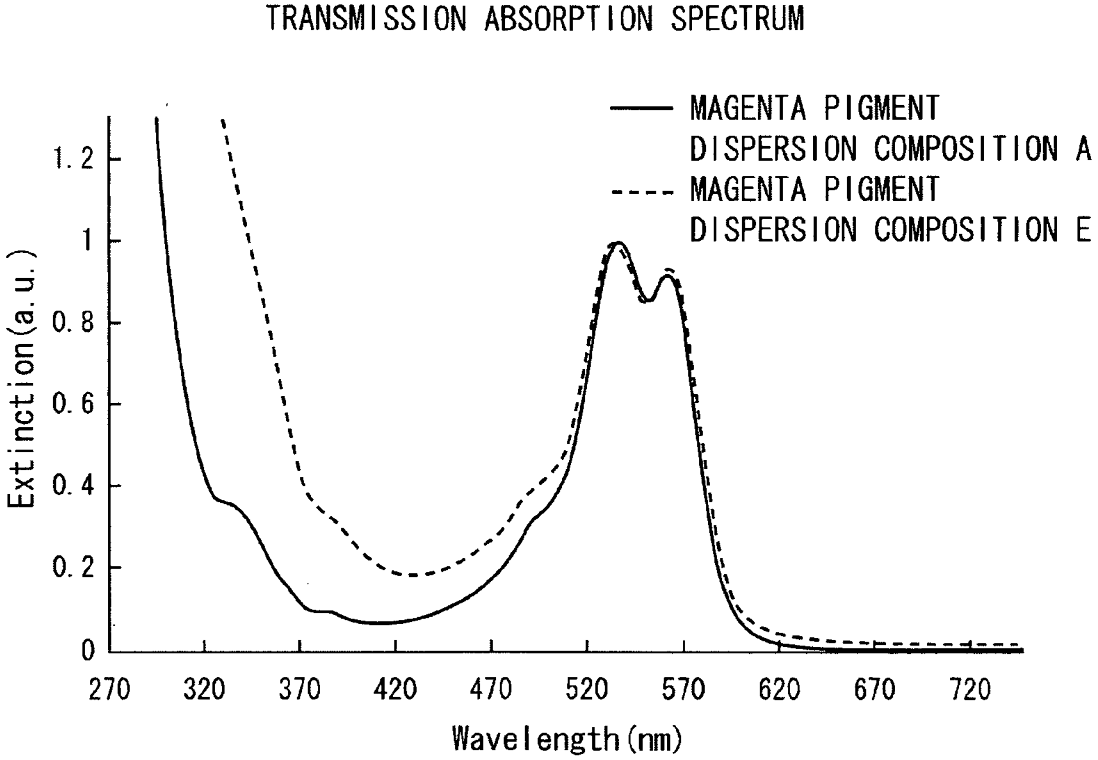
TRANSMISSION ABSORPTION SPECTRUM
MAGENTA PIGMENT DISPERSION COMPOSITION A
MAGENTA PIGMENT DISPERSION COMPOSITION E
Extinction (a.u.)
1.2
1
0.8
0.6
0.4
0.2
0
270
320
370
420
470
520
570
620
670
720
Wavelength (nm)

Europäisches Patentamt
European Patent Office
Office européen des brevets

# EUROPEAN SEARCH REPORT

Application Number
EP 09 00 4100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 702 961 A (KONICA MINOLTA HOLDINGS INC [JP]) 20 September 2006 (2006-09-20) * paragraphs [0014], [0019], [0074], [0098] * | 1-10 | INV. C09D11/10 |
| X | EP 1 788 044 A (KONICA MINOLTA HOLDINGS INC [JP]) 23 May 2007 (2007-05-23) * paragraph [0089]; claims; examples * | 1-10 | |
| X | EP 1 364 997 A (CANON KK [JP]) 26 November 2003 (2003-11-26) * claims; example 19 * | 1 | |
| X | DATABASE WPI Week 200776 Thomson Scientific, London, GB; AN 2007-816001 XP002533778 -& WO 2007/097331 A (FUJI FILM CO LTD) 30 August 2007 (2007-08-30) * abstract * | 1 | |
| A | EP 1 693 423 A (FUJI PHOTO FILM CO LTD [JP]) 23 August 2006 (2006-08-23) * paragraph [0126] * | 1 | |

TECHNICAL FIELDS SEARCHED (IPC)

C09D

The present search report has been drawn up for all claims

2

| Place of search | Date of completion of the search | Examiner |
|---|---|---|
| Munich | 24 June 2009 | Ellrich, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 00 4100

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2009

| Patent document cited in search report | Publication date | Patent family member(s) | Publication date |
|---|---|---|---|
| EP 1702961 A | 20-09-2006 | AT 413439 T | 15-11-2008 |
| | | US 2006205841 A1 | 14-09-2006 |
| EP 1788044 A | 23-05-2007 | US 2007109375 A1 | 17-05-2007 |
| EP 1364997 A | 26-11-2003 | CN 1462778 A | 24-12-2003 |
| | | JP 2004043776 A | 12-02-2004 |
| | | SG 114621 A1 | 28-09-2005 |
| | | TW 283697 B | 11-07-2007 |
| | | US 2004009294 A1 | 15-01-2004 |
| WO 2007097331 A | 30-08-2007 | CN 101395499 A | 25-03-2009 |
| | | JP 2007225824 A | 06-09-2007 |
| | | KR 20080100203 A | 14-11-2008 |
| EP 1693423 A | 23-08-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005179506 A
- JP 2003113341 A
- JP 2003128955 A
- JP 9151342 A
- JP 10140065 A
- JP 11209672 A
- JP 11172180 A
- JP 10025440 A
- JP 11043636 A
- WO 2006121018 A
- JP 2005307154 A
- JP 2007039643 A
- JP 60129742 A
- JP 60132767 A
- US 6145979 A